# EUROPEAN PATENT SPECIFICATION

(11) **EP 2 992 291 B1**
(45) Date of publication and mention of the grant of the patent: **26.12.2018**
(21) Application number: 13883409.8
(22) Date of filing: 01.05.2013
(51) Int. Cl.: G06Q 50/00, F41B 15/00, G06F 19/00, H04M 1/725, A63B 24/00, A63B 69/00, A63B 69/40, A63B 71/06, A63B 47/00, A63B 71/02, G09B 19/00

(54) **BALL THROWING MACHINE AND METHOD**
BALLWURFMASCHINE UND VERFAHREN
MACHINE DE LANCEMENT DE BALLES ET PROCÉDÉ

(43) Date of publication of application: 09.03.2016
(73) Proprietor: Toca LLC, Thousand Oaks, CA 91362 (US)
(72) Inventor: LEWIS, Edward, J., Thousand Oaks, CA 91362 (US); BARBERI, Steven, Joseph, Mission Viejo, CA 92691 (US)
(74) Representative: Dehns
(86) International application number: PCT/US2013/039143
(87) International publication number: WO 2014/178862

(56) References cited:
- WO-A2-2012/138528
- DE-U1- 20 305 276
- GB-A- 2 142 546
- US-A- 3 028 704
- US-A- 4 352 348
- US-A- 5 911 214
- US-A1- 2002 148 455
- US-A1- 2006 118 096
- US-A1- 2006 236 993
- US-A1- 2010 204 616
- US-A1- 2011 230 273

## Description

### BACKGROUND

In soccer, to be in control of the ball is of importance to every level of player. The ability to control an awkward bouncing ball quickly and effectively gives the player with the ball the immediate advantage. First touch is often the difference between success and failure in most situations during the match.

As players get older, the game gets faster and demands more speed. Consequently, there is a greater need for first-time passes and a precise first touch on the ball. Often, players cannot always play a first-time ball; therefore, they must trap the ball or may have to dribble if no teammates are in position to receive a first-time pass. A player will typically do one of four things when controlling the ball: shield the ball by putting their body between the ball and the opponent, pass the ball, shoot the ball, or dribble the ball. The space and time a player has to do these things can depend on how good the player's first touch is when receiving the ball.

Players can improve by developing a better touch or feel for the ball. A fine touch enables a player to be comfortable touching the ball with all parts of the foot as well as other parts of the body. It is helpful for players to practice controlling balls on the ground and balls in the air. Good ball control involves the ability to take the ball with one touch in such a way that a player can play the ball with his next movement without having to chase or reach for it.

The document US2006/236993 A1 discloses a soccer ball throwing device having a hopper configured to hold a plurality of soccer balls; a ball delivery device configured to receive the soccer balls from the hopper, the ball delivery device comprising: one or more wheels configured to impart motion to one of the soccer balls, and a frame attached to the one or more wheels, wherein the frame is positionable to control a trajectory of the ball; a ball delivery control circuit configured to control the position of the frame and the speed of the one or more wheels; and a controller in communication with the ball delivery control circuit, the controller comprising one or more processors configured to at least: cause the soccer ball throwing device to perform an initial training program that comprises a set of one or more ball drills, wherein the controller causes the soccer ball throwing device to pitch one or more of the soccer balls to a player during said one or more ball drills.

The document WO 2012/138528 A2 discloses systems and methods for providing coaching, training or equipment specification to individual golfers based on the data generated during their individual golf swing. Additionally data hubs that provide information and services to individuals based on data collected for a community of multiple golfers are disclosed.

### SUMMARY

The invention relates to a ball throwing system as claimed in claim 1 and to a method of controlling a ball throwing device as claimed in claim 8. In certain embodiments, a soccer ball throwing device includes a hopper that can hold a plurality of soccer balls and a ball delivery device that can receive the soccer balls from the hopper. The ball delivery device can include one or more wheels that can impart motion to one of the soccer balls and a frame attached to the one or more wheels. The frame can be positionable to control a trajectory of the ball. The soccer ball throwing device may also include a ball delivery control circuit that can control the position of the frame and the speed of the one or more wheels. Further, the ball throwing device can include a controller in communication with the ball delivery control circuit.

According to some embodiments, a soccer ball throwing device can include a gravity fed spiral hopper configured to hold a plurality of soccer balls and a ball delivery device configured to receive the soccer balls from the hopper. The ball delivery device can comprise one or more wheels configured to impart motion to one of the soccer balls, and a frame attached to the one or more wheels, wherein the frame is positionable to control a trajectory of the ball. The hopper can comprise a plurality of hopper sections each comprising a stackable support member and a spiral ramp connected to the support member. The plurality of hopper sections can be configured to allow adjustment to the capacity of the spiral hopper by stacking or unstacking one or more of the hopper sections with relation to at least one other hopper section and the ball delivery device. The soccer ball throwing device may also include a ball delivery control circuit configured to control the position of the frame and the speed of the one or more wheels and a controller in communication with the ball delivery control circuit.

In some embodiments, a soccer ball throwing device can include a gravity fed spiral hopper and a ball delivery device. The gravity fed spiral hopper can be configured to hold a plurality of soccer balls and can comprise a support member and a spiral ramp connected to the support member. The spiral ramp can comprise two ridges on opposite sides of the spiral ramp configured to reduce the surface area of contact between the spiral ramp and a first soccer ball of a first size. The spiral ramp may also comprise a bottom rolling surface that together with the two ridges are configured to reduce the surface area of contact between the spiral ramp and a second soccer ball of a second size which is smaller than the first soccer ball. The ball delivery device can be configured to receive the soccer balls from the hopper and can comprise one or more wheels configured to impart motion to one of the soccer balls, and a frame attached to the one or more wheels, wherein the frame is positionable to control a trajectory of the ball. The soccer ball throwing device may also include a ball delivery control circuit configured to control the position of the frame and the speed of the one or more wheels and a controller in communication with the ball delivery control circuit.

In certain embodiments, a soccer ball throwing device includes a hopper that can hold a plurality of soccer balls and a ball delivery device that can receive the soccer balls from the hopper. The ball delivery device can include one or more wheels that can impart motion to one of the soccer balls and a frame attached to the one or more wheels. The frame can be positionable to control a trajectory of the ball. The soccer ball throwing device may also include a ball delivery control circuit that can control the position of the frame and the speed of the one or more wheels. Further, the ball throwing device can include a controller in communication with the ball delivery control circuit. The controller can include one or more processors that can at least: cause the soccer ball throwing device to perform an initial training program that includes a set of one or more ball trapping drills, where the controller causes the soccer ball throwing device to pitch one or more of the soccer balls to a player during said one or more ball trapping drills, enabling the player to practice trapping the ball and thereby improve ball control skills; record player training data that includes information regarding training of the player performed during the initial training program; submit the player training data from the controller over a network to a soccer network application along with a request for feedback from a remote coach through the soccer network application; and in response to submission of the training session data, receive a customized training program from the coach via the soccer network application. The customized training program can include one or more second drills to be executed by the soccer ball throwing device.

In various embodiments, a method of controlling a soccer ball throwing device includes providing a soccer ball throwing device having a hopper that can hold a plurality of soccer balls, a ball delivery device that can receive the soccer balls from the hopper, where the ball delivery device has one or more wheels that can impart motion to one of the soccer balls, and a frame attached to the one or more wheels, where the frame is positionable to control a trajectory of the ball, and a ball delivery control circuit that can control the position of the frame and the speed of the one or more wheels. The method can also include communicating with the soccer ball throwing device via a controller including computer hardware. The method may also include causing the soccer ball throwing device, with the controller, to perform an initial training program that comprises a set of one or more ball trapping drills, where the controller causes the soccer ball throwing device to pitch one or more balls to a player during said one or more ball trapping drills, enabling the player to practice trapping the ball and thereby improve ball control skills. Moreover, the method can include recording player training data that includes information regarding training of the player performed during the initial training program, submitting the player training data from the controller over a network to a soccer network application along with a request for feedback from a remote coach through the soccer network application, and in response to said submitting the training session data, receiving a customized training program from the coach via the soccer network application. The customized training program can include one or more second drills to be executed by the soccer ball throwing device. The method can be implemented by one or more physical processors.

A method of controlling a soccer ball throwing device can include, in various embodiments, establishing communication between a soccer ball throwing device and a controller having computer hardware. The method can also include causing the soccer ball throwing device, with the controller, to perform an initial training program that comprises a set of one or more ball trapping drills, where the controller causes the soccer ball throwing device to pitch one or more balls to a player during said one or more ball trapping drills, enabling the player to practice trapping the ball and thereby improve ball control skills. The method can also include recording player training data that includes information regarding training of the player performed during the initial training program. Further, the method can include submitting the player training data from the controller over a network to a soccer network application along with a request for feedback from a remote coach through the soccer network application, and in response to submitting the training session data, receiving a customized training program from the coach via the soccer network application. The customized training program can include one or more second drills to be executed by the soccer ball throwing device. The method can also be implemented by one or more physical processors.

A system for controlling a ball throwing device can include a ball machine control module that can cause a soccer ball throwing device to perform an initial training program that includes a set of one or more ball trapping drills. The ball machine control module causes the soccer ball throwing device to pitch one or more balls to a player during said one or more ball trapping drills in certain embodiments, enabling the player to practice trapping the ball and thereby improve ball control skills. The system can also include a training module implemented in one or more processors. The training module can record player training data that includes information regarding training of the player performed during the initial training program, submit the player training data over a network to a soccer network application along with a request for feedback from a remote coach through the soccer network application, and in response to said submitting the training session data, receive a customized training program from the coach via the soccer network application. The customized training program can include one or more second drills to be executed by the soccer ball throwing device.

In some embodiments, non-transitory physical computer storage is provided that includes instructions stored therein for implementing, in one or more processors, a system for controlling a ball throwing device. The system can include a ball machine control module that can cause a soccer ball throwing device to perform an initial training program that includes a set of one or more ball trapping drills. The ball machine control module can cause the soccer ball throwing device to pitch one or more balls to a player during said one or more ball trapping drills, enabling the player to practice trapping the ball and thereby improve ball control skills. The system can also include a training module that can record player training data that includes information regarding training of the player performed during the initial training program, submit the player training data over a network to a soccer network application along with a request for feedback from a remote coach through the soccer network application, and in response to submitting the training session data, receive a customized training program from the coach via the soccer network application. The customized training program can include one or more second drills to be executed by the soccer ball throwing device.

A method of controlling ball throwing devices can include, in some embodiments, receiving player training data from a plurality of controllers of ball throwing machines. The player training data can correspond to a plurality of players. In addition, the player training data can reflect usage by the players of the ball throwing machines. The method may also include electronically generating a remote coaching user interface by a computer system including computer hardware. The remote coaching user interface can include options for the coach to select recommended training programs for the players based on the player training data. The method can also include receiving, from the remote coaching user interface, coach-selected training programs to be sent to the plurality of controllers. Moreover, the method can include providing data representing the selected training programs to the plurality of controllers, thereby enabling the players to implement the selected training programs in the respective ball throwing machines of the players.

Certain aspects, advantages and novel features of the inventions are described herein. It is to be understood that not necessarily all such advantages may be achieved in accordance with any particular embodiment of the inventions disclosed herein. Thus, the inventions disclosed herein may be embodied or carried out in a manner that achieves or selects one advantage or group of advantages as taught herein without necessarily achieving other advantages as may be taught or suggested herein.

### BRIEF DESCRIPTION OF THE DRAWINGS

The features disclosed herein are described below with reference to the drawings. Throughout the drawings, reference numbers are re-used to indicate correspondence between referenced elements. The drawings are provided to illustrate embodiments of the inventions described herein and not to limit the scope thereof.
FIGURE 1 is a perspective view of a ball throwing machine.
FIGURE 2 is a cross-section of the ball throwing machine of FIGURE 1.
FIGURE 3 shows some of the internal components of the ball throwing machine including portions of a ball delivery device.
FIGURE 4 illustrates the bottom of the ball throwing machine.
FIGURE 5 shows portions of a ball delivery device.
FIGURE 6 illustrates an example training scenario using the ball throwing machine in conjunction with a controller.
FIGURE 7 illustrates an embodiment of a computing environment for facilitating communications between the controller of FIGURE 6 and a soccer network application.
FIGURE 8 illustrates an embodiment of a ball machine control process that may be implemented by the controller of FIGURE 6.
FIGURE 9 illustrates an embodiment of a training process that may be implemented using the ball throwing machine and the controller of FIGURE 6.
FIGURE 10 illustrates an embodiment of a coaching process that may be implemented at least in part by the soccer network application of FIGURE 7.
FIGURES 11 through 15 illustrate embodiments of controller user interfaces that may be generated by the controller of FIGURE 6.
FIGURES 16 and 17 illustrate embodiments of user interfaces that may be generated by the soccer network application of FIGURE 7.
FIGURE 18 shows an embodiment of a hopper for a ball throwing machine.
FIGURE 19 is an exploded view of the hopper of FIGURE 18.
FIGURE 20 illustrates two different hopper sections.
FIGURE 21 shows the stackability of tubes used with hopper sections.
FIGURE 22 shows a ball on a ramp of a hopper.

### DETAILED DESCRIPTION

### I. Introduction

As described above, a soccer player's first touch of the ball is an important core skill to develop. A touch can be as simple as receiving a slow pass on the ground or as difficult as taking a top speed knuckling ball out of the air and straight down onto one's foot. Touch enhancement is a continual process; youth and professionals alike perpetually train to ever improve their first touch and ball handling skills. The skill of touch is typically trained by players forming pairs and passing the ball to one another. This training method can produce results but tends to fall short in providing a disciplined approach to training that enables progress measurement and goal-oriented improvement. Further, this technique requires a player to find another individual with which to practice, which is not always practical, particularly for serious athletes who devote significant time to their training.

This disclosure describes a specialized ball throwing machine that can be used to improve a player's first touch and ball control, among other benefits. The ball throwing machine can be designed to throw, lob, pitch, or otherwise eject soccer balls toward a player, who can trap the balls or practice other ball control skills. The ball throwing machine may be controlled using a controller in the form of a handheld computing device or the like. The controller can include software and hardware that enables the player to remotely control the machine, for example, wirelessly. The controller can include functionality for recording a player's progress with ball training, and the player can upload this progress information to a software network application, which may be a web site or the like. The soccer network application can provide functionality for a remote coach to analyze the player's progress and provide a customized training program to the player based on the player's progress. As a result, the ball throwing machine can enable the player to track progress and receive remote coaching to improve that progress. These and other features of the ball throwing machine, controller, and associated soccer network application are described in detail below.

The game of soccer is commonly known in some countries as "football" or "association football." For convenience, this specification refers solely to the term "soccer," although such usage should be considered synonymous with "football" and "association football." Further, embodiments of the ball throwing machine, controller, and soccer network application described herein can be used or adapted for sports other than soccer, some examples of which are described below.

It should also be noted that although this specification refers primarily to using a ball throwing machine to train ball trapping skills, the ball throwing machine can be used to train other skills. For example, the ball throwing machine can be used to train passing, shooting, and stopping a soccer ball, among other ball skills.

### II. Example Ball Throwing Machine

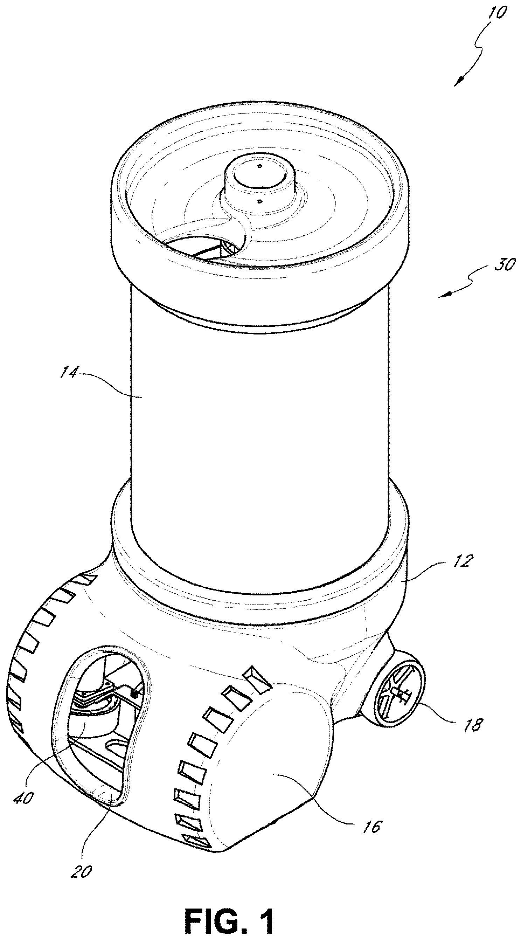

A ball throwing machine 10 is shown in **FIGURE 1****.** The ball throwing machine 10 can be used to pitch a ball, such as to deliver a ball to a user. For example, the ball throwing machine 10 can be used to deliver a soccer ball or a specialized soccer-type ball to a user. The ball throwing machine 10 can also be used with various other balls for various other sports.

The illustrated ball throwing machine 10 includes an outer housing 12 with an upper section 14 and a lower section 16. The ball throwing machine 10 can be that can be easily movable. For example, the ball throwing machine can include one or more motorized or non-motorized wheels 18. Some embodiments may also include one or more handles for securing the ball throwing machine while moving the same.

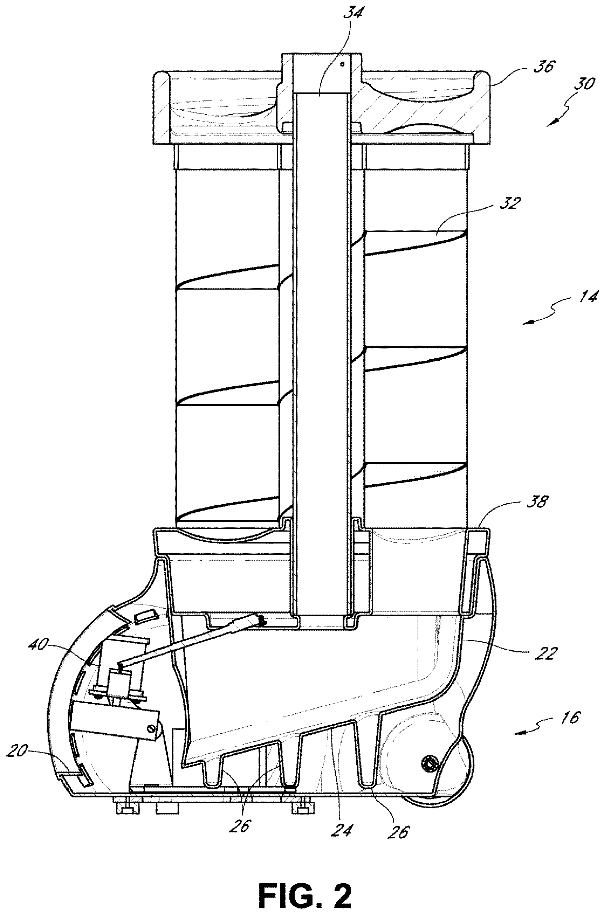

As can be seen in **FIGURES 1** and **2****,** the upper section 14 includes a hopper 30. The hopper 30 can be used to receive and/or store balls to later be ejected or thrown by the ball throwing machine 10. The illustrated embodiment includes a high-volume or large storage-type hopper 30. In some embodiments, the hopper can store as many as 25 balls. Of course, it will be understood that the hopper could hold more or less balls, as necessary or desired.

Many different styles and types of hoppers can be used. As shown, the hopper 30 is a gravity-type hopper with a spiraling ramp 32 located around an internal tube 34. The tube 34 can be used to impart structural strength to the hopper and can also provide appropriate spacing such that balls within the hopper are able to properly rotate and move downward in the hopper. Alternatively, the tube 34 is not included in some embodiments. Rather, the hopper 30 merely includes the spiraling ramp 32. In another embodiment, the spiraling ramp 32 is omitted and the hopper 30 includes a tube 34 that holds a plurality of balls.

In some embodiments, the hopper 30 can be transparent. For example, the outer material of the hopper may be clear Plexiglas or plastic, or a thin mesh-like fabric. This transparency can allow the user to view the balls in the hopper 30 and identify when the hopper 30 needs to be reloaded. The hopper 30 can have a top portion 36 and a bottom portion 38. The top portion 36 can be configured for receiving one or more balls into the hopper 30 and in some embodiments, can hold additional balls. The bottom portion can be configured to transition balls from the hopper 30 into a ball staging area 22.

The hopper 30 can be used for storing balls when the ball throwing machine 10 is in use and/or when the ball throwing machine 10 is not in use. In some embodiments, the hopper 30 can be collapsible or detachable to decrease the size of the ball throwing machine 10, such as when the ball throwing machine is not in use. In some embodiments, the tube 34 can be a telescoping tube and the outer material of the hopper 30 can be fabric, such that the hopper 30 can increase or decrease in size. In some embodiments with the collapsible hopper 30, the top portion 36 can be collapsed to sit on top of the bottom portion 38. Alternatively, the tube 34 can be configured to be removable to remove structural support separating the top portion 36 from the bottom portion 38.

Advantageously, in certain embodiments, the ball throwing machine 10 is designed to deliver soccer balls that are smaller than adult regulation size soccer balls to thereby enable more effective training of ball trapping skills. The smaller surface area of such balls can make the smaller balls harder to trap than regulation size balls (such as size "5" soccer balls). Training with smaller balls can therefore benefit a player using a larger, regulation-size ball in a match because the player may have obtained skills that transfer over to the easier-to-trap, larger ball. In some embodiments, the balls used with the ball throwing machine 10 are about half the size of regulation size 5 balls, about a third of the size of regulation size 5 balls, about a quarter of the size of regulation size balls 5, or some other size. For youth players who may already be using a smaller ball than an adult ball in matches, the ball throwing machine 10 can employ even smaller balls than the youth players use in their matches. For instance, if youth player is used to using size 4 soccer balls, the ball throwing machine can throw size 3 soccer balls or smaller, etc. However, in other embodiments, regulation size balls are used instead of smaller balls.

The size of the balls used by the ball throwing machine 10 can be smaller than a regulation size 3 ball, even for older youth and adult players. For example, in one embodiment, the balls are preferably about 152 mm in diameter. However, in other embodiments the balls can range in size from about 132 mm to about 172 mm in diameter while still providing some or all of the benefits of the balls described herein. In still other embodiments, the balls can range in size from about 115 mm to 215 mm in diameter while still providing at least some of the benefits described herein.

A ball that may be used herein may have any of the following characteristics: a rubber construction, a butyl bladder, one or more nylon plys (such as 1, 2, 3, or 4 or more nylon plys), spiral winding of the nylon plys, and the like. These and other characteristics of the balls, among others (including size, texture, weight, cover type, etc.) can be selected to achieve a desired liveliness or bounciness of the ball. Different balls may be provided with different liveliness for different levels of difficulty. For instance, a ball that has more bounce may be harder to trap and thus appropriate for a higher level of difficulty, while a ball with less bounce may be easier to trap and thus appropriate for a lower level of difficulty.

Moreover, the colors of the balls can be selected to target foot-eye coordination. For example, the balls may be blue, green, or red, or a combination of the same, as these colors can be the easier to see than other colors. Alternatively, colors may be selected that are less easy to see so as to increase the difficulty of training. Different colors may be provided for boys and girls, who may perceive colors slightly differently.

In one embodiment, the balls are not actual soccer balls. For example, a ball having a smaller size than a regulation size ball can be considered to be a ball other than a soccer ball. Counter intuitively, it can be beneficial to train soccer skills (such as trapping) using balls that are not soccer balls, such as any of the balls described herein. Balls used in other sports can also be thrown by the ball throwing machine 10 for the purposes of training soccer skills. Tennis balls, racquet balls, and squash balls, for instance, can be beneficially used to train trapping skills.

Moving now to the bottom portion 16 of the outer housing 12, the bottom portion 16 is shown housing the ball staging area 22, as well as the ball delivery device 40. As can be seen in **FIGURE 2****,** the ball staging area 22 can include a ramp 24 that can hold one or more balls. The ramp 24 can include one or more ball stops 26. The ball stops can be used to stop individual balls or the balls collectively.

For example, as shown, the ball staging area 22 includes three ball stops 26. In some embodiments, the ball stops 26 can include a solenoid configured to advance and/or retract a rod or other member in front of a ball. The three balls stops 26 can allow the ball throwing machine 10 to control the projection of the ball completely with the ball delivery device 40. For example, separating the balls with multiple ball stops 26 can allow the ball delivery device 40 to pitch a ball without the influence of other balls acting or pushing upon the ball. It will be understood that the balls in the hopper may be pressing down on one another by gravity and could have an influencing effect on the trajectory of the ball, if allowed to contact the ball being pitched. However, fewer than three ball stops 26 may be included in the machine 10 instead.

As is shown, the bottom portion 16 of the outer housing also includes at least one opening 20. The opening 20 can provide space for the ball to be thrown through to the user. The opening 20 can be one of many different shapes, such as oval, elliptical, rectangular, triangular, or any other desired shape. In some embodiments, the bottom portion 16 of the outer housing 12 includes a minimal amount of material, such that a majority, or at least a substantial portion, of the ball delivery device 40 is exposed and not enclosed. In such embodiments, little to no portion of the outer housing may be between the ball delivery device 40 and the user.

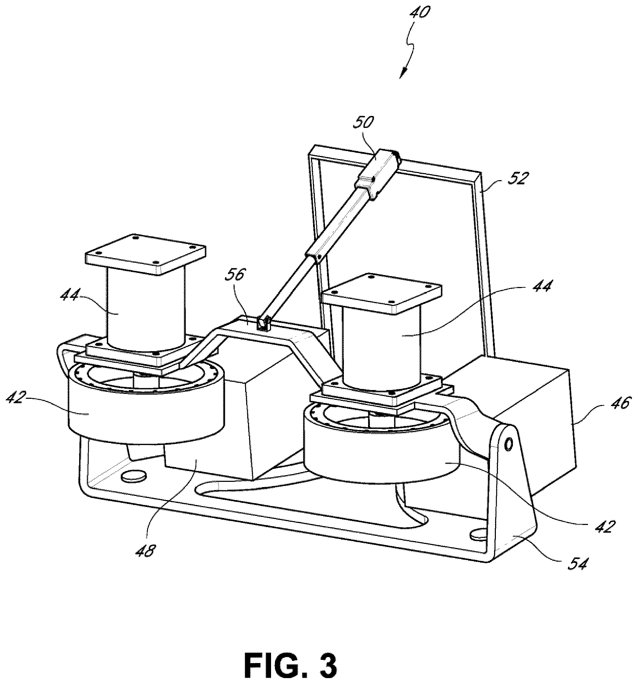

Turning now to **FIGURE 3****,** an embodiment of a ball delivery device 40 is shown. A ball delivery device 40 can include any number of various components. The ball delivery device 40 can be used to impart motion to a ball. In some embodiments, the ball delivery device 40 can be used to control the trajectory of the ball, including the speed and angle at which the ball leaves the ball throwing machine 10. The ball delivery device 40 can perform these functions in various different manners including those described below. It is to be understood that the ball delivery device 40 also encompasses various other systems and methods of performing the above functions, as well as, other, additional and/or alternative functions.

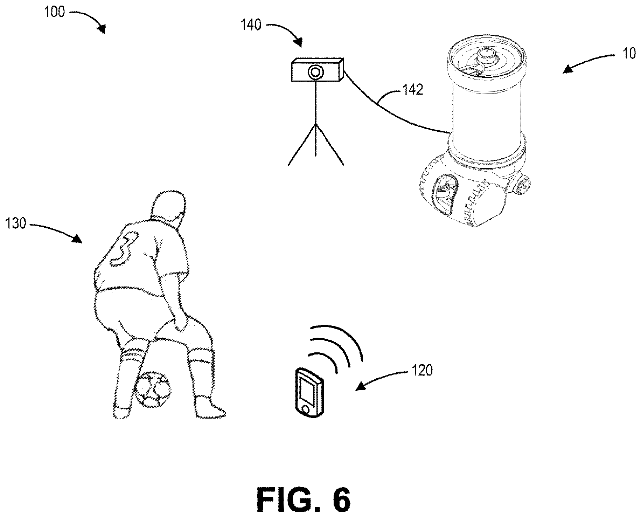

As illustrated, the ball delivery device 40 includes one or more wheels or balls 42 which are used to impart speed, spin, and/or other features of trajectory to a ball. The ball delivery device 40 can also include one or more motors 44 which are connected to the wheels 42 to thereby deliver speed and direction to the wheels 42. The ball delivery device 40 can also include a control unit 46 and a power source 48, such as batteries. The control unit 46 can include various features that can be used to control the ball delivery device 40. For example, the control unit 46 can include electronic circuitry, a processor, and memory having program instructions stored thereon for controlling the various electrical features of the ball delivery device 40, such as the motorized wheels 18 and actuators (described below). Further, the control unit 46 can include a wireless network interface card (NIC) and antenna or wired NIC for communicating with a controller device that sends commands to the ball throwing machine 10, as described below with respect to FIGURE 6.

The ball delivery device 40 may also include one or more actuators 50. The actuator 50 can be used to control an angle of the ball delivery device, including the wheels 42. The ball delivery device 40 can include a frame having one or more brackets 52, 54. The brackets 52, 54 can be positioned in fixed relationship with one another. As shown, the actuator 50 is connected to at one end to bracket 52 and at an opposite end to bracket 56. The bracket 56 can be attached to the wheels and in some embodiments, the motors 44. The bracket 56 can also be hingedly attached to bracket 54. The actuator 50 can move to increase or decrease the length of the actuator.

In the illustrated position of **FIGURE 3****,** the longitudinal axis of each wheel 42, about which the wheel rotates, is generally vertical. Moving the actuator 50 can change this position and orientation of the axis and wheel 42 as changing the length of the actuator 50 can change the angle or positional relationship between the bracket 56 and the frame, including brackets 52 and 54. When the actuator 50 is lengthened, the distance between the bracket 52 and parts of the bracket 56 is increased. When the actuator 50 is shortened, parts of the bracket 56 are moved closer to the bracket 52. This can result in the axis moving either upward or downward towards a horizontal orientation. It will be understood that changing the angle of the wheels 42 can change the trajectory of the ball when it is ejected.

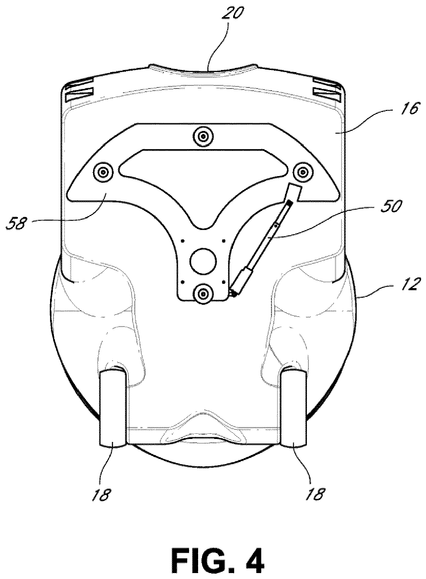

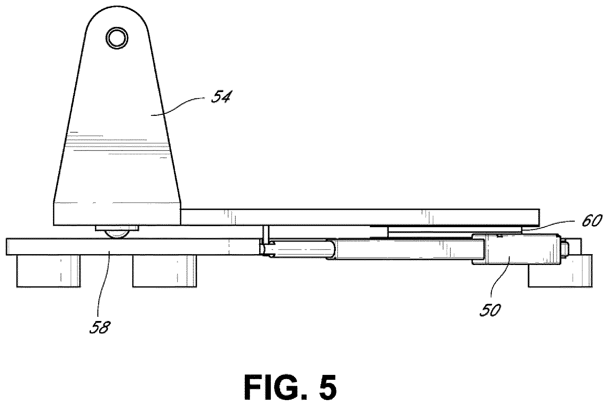

Moving now to **FIGURES 4** and **5****,** another feature of the ball delivery device 40 will be described. The ball delivery device 40 can also include features to change the side-to-side trajectory of the ball. As can be seen, an actuator 50 can be located on the bottom of the ball throwing machine 10. Such an actuator can be located either internally or externally of the outer housing 12. A bracket 58 can be connected to the bracket 54 through a turntable 60. Such a connection can allow the bracket 54 to move with respect to the bracket 58. The actuator 50 can be connected to both brackets 54, 58 such that movement of the actuator 50 can change the positional relationship of portions of the bracket 54 with the bracket 58.

Moving the actuator 50 illustrated in **FIGURES 4** and **5** can change the relationship of a portion of the ball delivery device 40 with the opening 20. Thus, the ball delivery device can pitch the ball out the opening within a range of angles from the straight on position. For example, the ball delivery device can pitch the ball within ± 10% or ± 20% (or some other angle) of the straight-on position.

It will be understood that the ball delivery device 40 can function in many different ways, including ways different from those described herein. For example, rather than including an actuator, the ball delivery device 40 can be moved or positioned with one or more stepper motors connected directly between two rotating brackets. Further, although described as being primarily used for pitching soccer balls, the ball delivery device 40 can also be adapted to pitch other types of balls, such as baseballs, softballs, tennis balls, racquet balls, squash balls, cricket balls, lacrosse balls, volleyballs, and the like.

### III. Example Training and Computing Environments

**FIGURE 6** illustrates an example training scenario 100 for using the ball throwing machine 10 in conjunction with a controller 120. In the training scenario 100, a player 130 is training trapping or other ball control skills with the ball throwing machine 10. The player 130 may be any age or gender, and the ball throwing machine 10 can include settings that are appropriate for children, youth, and adults.

A controller 120 is also shown and is in wireless communication with the ball throwing machine 10. The controller 120 can be a computing device of the player 130 (or the player's coach or parent), and may be, for example, a smart phone, tablet, laptop, personal digital assistant (PDA), or other wireless handheld device, or even a desktop in some embodiments. The controller 120 can communicate wirelessly with a wireless module in the ball throwing machine 10 (e.g., in the control unit 46). Alternatively, the controller 120 can be coupled with the ball throwing machine 10 using a cable or a docking station installed in the ball throwing machine 10.

The controller 120 can include functionality for controlling the training programs that run on the ball throwing machine 10. For example, the controller 120 can include functionality for a user thereof, such as the player 130, coach, or a parent, to select training programs to be communicated to the ball throwing machine 10. Each training program can include a set of drills, commands, or instructions to be executed by the ball throwing machine 10, such as how many balls to throw in a given period of time, how fast, and with what trajectory. The training programs can be selected and customized by the player 130, a coach, or a parent.

An optional camera 140 is shown in communication with the ball throwing machine 10 via a cable 142. The camera 140 can take pictures or video of the player 130 during training sessions. The camera 140 can transmit the pictures and/or video to the ball throwing machine 10 over the cable 142 (or a wireless link). In turn, the ball throwing machine 10 can provide the pictures and/or video to the controller 120 wirelessly. Alternatively, the camera 140 can communicate directly with the controller 120, for example, by wirelessly sending pictures and video to the controller 120. Further, in some embodiments, images or video can be taken of the player 130 using a camera in the controller 120 or a built-in camera in the ball throwing machine 10 (not shown) instead of or in addition to the camera 140. In addition, in some embodiments, the camera 140 can communicate with player recognition software running in a processor or controller of the ball throwing machine 10. This player recognition software can locate a player and cause the ball throwing machine 10 to automatically throw a ball to the player. The player recognition software can include facial recognition software but may also detect a player from features of the player other than the face.

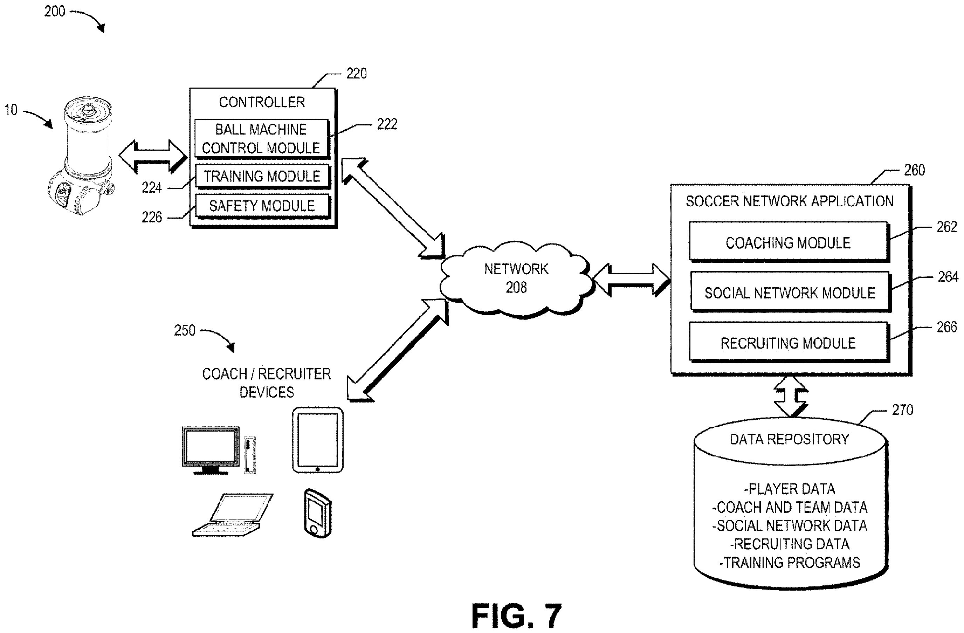

Advantageously, in some embodiments, the player 130 can use the controller 120 to submit pictures, video, or other player training data to a remote web site or network application (described below with respect to FIGURE 7). The web site or network application may provide functionality for a coach to evaluate the player training data and provide feedback, including customized training programs that can be executed by the ball throwing machine 10.

**FIGURE 7** illustrates an embodiment of a computing environment 200 for facilitating communications between the ball throwing machine 10, a controller 220, and a soccer network application 260. Advantageously, in certain embodiments, the computing environment 200 enables players to track player training data regarding training sessions with the ball throwing machine 10 and provide the player training data to a coach via the soccer network application 260. The coach can use the soccer network application 260 to provide feedback to the player, including customized training programs, based on the players' progress with the ball throwing machine 10.

By way of overview, the ball throwing machine 10 communicates with the controller 220, for example, wirelessly using Wi-Fi (IEEE 802.11x), Bluetooth, Zigbee, or any other standard protocol(s). The controller 220 is a more detailed example of the controller 120 of FIGURE 6 and can have all the features of the controller 120 described above. The controller 220 can communicate with the soccer network application 260 over a network 208, which may be a LAN, a WAN, the Internet, or combinations of the same. Devices 250 operated by coaches and/or recruiters may also communicate with the soccer network application 260 (or directly with the controller 220 or machine 10) over the network 208.

In the depicted embodiment, the controller 220 includes a ball machine control module 222, a training module 224, and a safety module 226. Each of these components can be implemented with hardware and/or software. In one embodiment, the modules 222, 224, 226 are part of a controller application installed on the controller 220. The controller application may be obtained for installation on the controller 220 from an application store (such as the iTunes™ application store or Android™ Market application store), via computer-readable media (such as a USB key or DVD), or the like. In some embodiments, the controller 220 is sold or otherwise provided together with the ball throwing machine 10 with the controller application preinstalled. Other functionality may also be provided with the controller 220 in some implementations.

The ball machine control module 222 of the controller 220 can provide functionality for a user (such as a player, coach, or parent etc.) to control the ball machine 10. For instance, the ball machine control module 222 can output a user interface that provides options for a user to select different types of training programs or individual ball throwing characteristics to be implemented by the ball throwing machine 10. This user interface can be implemented on a touch screen display of the controller 220 in some devices, although other types of controller 220 displays may also be used. In response to receiving user input regarding a desired training program or throwing pattern, the ball machine control module 222 can send instructions or commands to the ball throwing machine 10. A processor or other circuitry in the ball throwing machine 10 (such as the control unit 46) can receive and execute these instructions. The ball machine control module 222 can therefore enable a user to control any functions of the ball throwing machine 10, including but not limited to ball velocity, ball delivery (e.g., air, ground, line, lob, or bounce), ball trajectory (e.g., angled, curved, or straight), ball oscillation (e.g., side-to-side or middle-to-side), ball throwing frequency (e.g., every user-specified number of seconds), and the like.

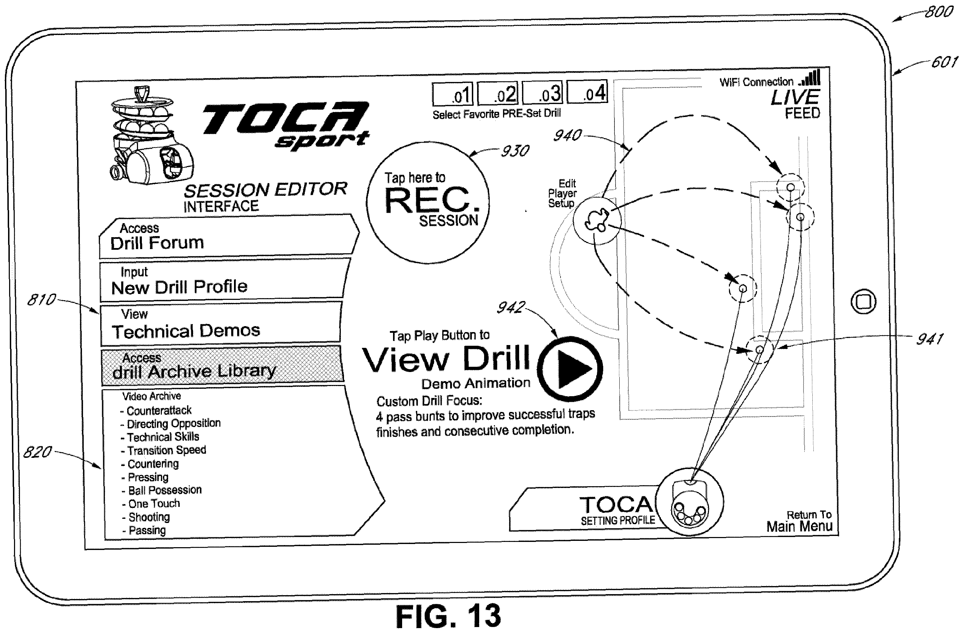

The training module 224 can provide functionality for a user to record data regarding the player's usage of the ball throwing machine 10. For example, the training module 224 may provide a training user interface that enables a user to record this player training data (see, e.g., FIGURE 13). This player training data can include a log of the commands sent to the machine 10, the commands executed by the machine 10, the user's success with traps or goals or other ball-control drills, video data, and the like. In one example implementation, the training module 224 provides user interface controls (such as touch-screen controls) that enable a user to input whether a trap is successful. The training module 224 may also include voice recognition functionality, using any commercially-available voice recognition software. A user can therefore dictate verbal training results to the training module 224, such as "successful trap" or "missed trap," or simply just "success" or "miss," or the like. The training module 224 can interpret the voice commands and record the interpretation (e.g., a success or miss) in the player training data. The training module 224 can supply the player training data to the soccer network application 260 (described below) over the network 208.

The safety module 226 can provide a user interface that enables users to manage safe use of the ball throwing machine 10. For instance, the safety module 226 can provide parental controls or the like that enable a parent, coach, or other responsible person to manage access to the ball throwing machine 10 or features thereof. It can be desirable to have such features to prevent accidents that can occur, for example, from setting the ball velocity or throwing frequency too high for younger players. These parental controls can include an authentication mechanism (such as a username/password or other credential) for enabling access to the machine 10, control over ball-throwing parameters such as velocity, and an idle or timeout feature that can shut down the controller 220 and/or ball throwing machine 10 after a timeout period of inactivity (such as 30 seconds, a minute, or some other time). Any of these safety features can also be implemented directly in the electronics of the ball throwing machine 10, rather than in the controller 220.

The soccer network application 260 can store player training data received from the training module 224 in a data repository 270. The data repository 270 can include any form of physical computer data storage, as well as logical computer storage. For instance, the data repository 270 can include one or more databases, associated physical storage media, and the like. The soccer network application 260 can include hardware and/or software for providing players (via the controllers 220 or other devices), coaches, and recruiters with access to the player training data, among optionally other data and features. The soccer network application 260 includes, in the depicted embodiment, a coaching module 262, a social network module 264, and a recruiting module 266. These modules represent at least some of the functionality that the soccer network application 260 may provide to players, coaches, recruiters, and others.

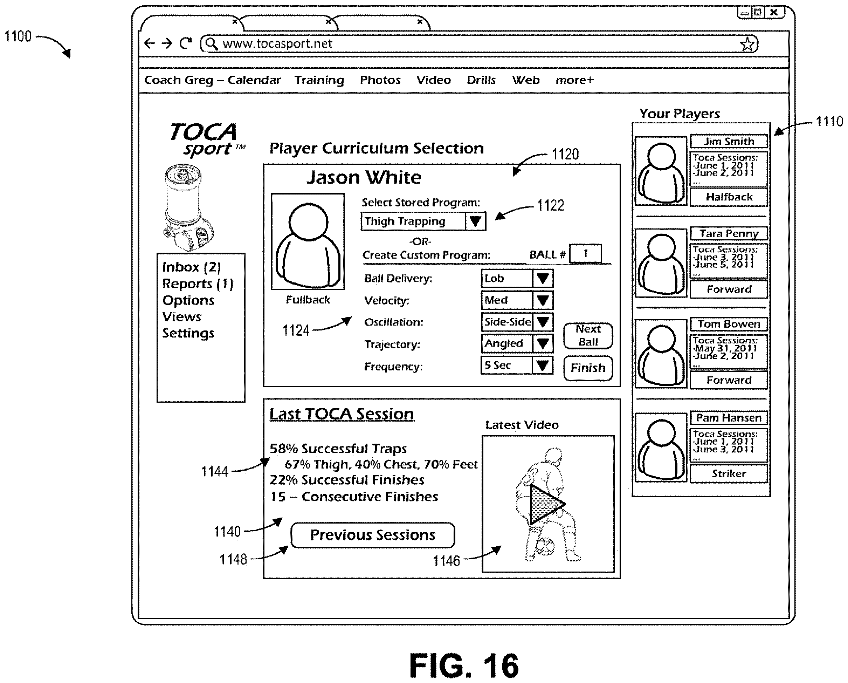

Each of the modules 262, 264, 266 can provide user interfaces for users to access features of the modules 262, 264, 266. For instance, the coaching module 262 can provide one or more user interfaces that enable a coach to access and analyze player training data for a plurality of players associated with that coach. If the player training data includes video, for instance, the coaching module 262 can provide functionality for the coach to view videos of players. The coaching module 262 can also provide functionality through one or more user interfaces for a coach to provide feedback to players. This feedback may be in the form of textual feedback, video feedback, or training program feedback. A coach may, for instance, respond to the uploading of a player's training data with comments on the player's form and suggest adjustments to the player's training program. Beneficially, in some embodiments, the coaching module 262 also enables a coach to select or create a training program to provide to a player as homework or the like. The coaching module 262 may provide a user interface for creating a custom training program for a specific player (see FIGURE 16).

Moreover, the coaching module 262 can enable a coach to better leverage his or her time when training players. In the past, a coach has typically spent a few hours per week with an entire team of players, and the coach's ability to provide individual attention to those players has been limited. Further, a coach is typically not present when a player is practicing at home or with friends. However, with the soccer network application 260, a coach can evaluate player training data for several players and provide individualized feedback and training program recommendations to those players, without leaving his or her home. Thus, the soccer network application 260 can enable coaches to focus more individual attention on the development of players' ball control and trapping skills.

The social networking module 264 can provide functionality for different players, coaches, and the like to interact together in an online soccer community. For example, the social networking module 264 can provide user interfaces for creating player or coach pages, discussing soccer training with teammates and friends, uploading pictures and video, linking to web sites regarding soccer or other topics, and other features that may be found in any social network. Generally, the social network provided by the social networking module 264 can enable users to keep track of each other's progress in training with the ball throwing machine 10 and encourage each other in their progress. The social network module 264 may also provide an event user interface that enables users to coordinate events, such as impromptu soccer games, among other features.

The recruiting module 266 can provide a recruiting user interface that enables recruiters to examiner player data and/or for players or coaches to upload player data to recruiters. Some examples of recruiters that can use such features include high school recruiters, college recruiters, and professional recruiters. In one embodiment, the recruiting user interface enables recruiters to view player training data obtained with respect to the ball throwing machine 10. Advantageously, in certain embodiments, player training data obtained in conjunction with the ball throwing machine 10 can provide a standardized approach to reviewing player performance. Other player data may also be stored in the data repository 270 and made available to recruiters via the recruiting user interfaces, such as in-game data, coach reviews, scout reports, and the like.

It should be noted that the soccer network application 260 can be implemented as one or more physical servers. These servers may be geographically dispersed or co-located. In addition, in some embodiments, the soccer network application 260 is implemented as a cloud-computing platform. For example, the soccer network application 260 can be implemented as one of a plurality of virtual machines executing on a hypervisor, which can be a thin layer of software executing on a physical machine. Accordingly, the modules 262, 264, 266 of the soccer network application 260 can be implemented in hardware and/or softwa re.

Further, it should be noted that although the features of FIGURES 6 and 7 as well as the features in subsequent FIGURES can be implemented in conjunction with the ball throwing machine 10, other ball throwing machines than the one explicitly described may also be used. For example, a throwing machine designed for a different sport can be controlled by the controller 120 or 220, or a different soccer-ball throwing machine can be used with the controller 120 or 220.

### IV. Example Training Processes

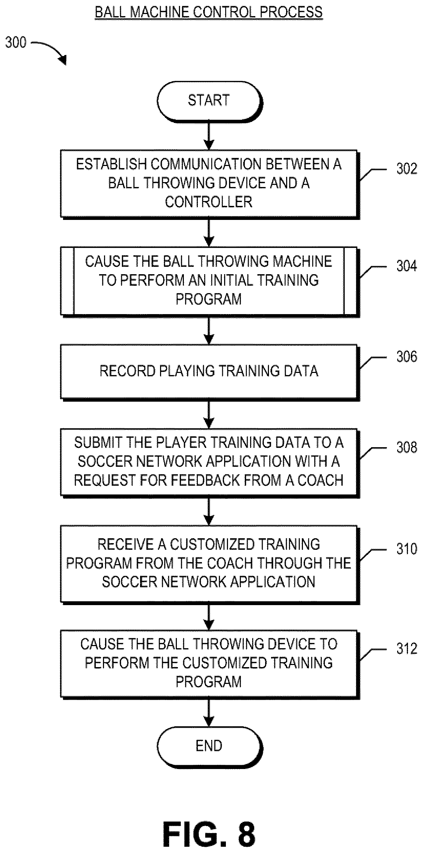

**FIGURE 8** illustrates an embodiment of a ball machine control process 300 that may be implemented by the controller 220 (or 120). The ball machine control process 300 can enable a player to run customized training programs on a ball throwing machine, such as the ball throwing machine 10. Advantageously, these customized training programs can be designed by a remote coach who creates or selects the programs based on the player's progress with the ball throwing machine.

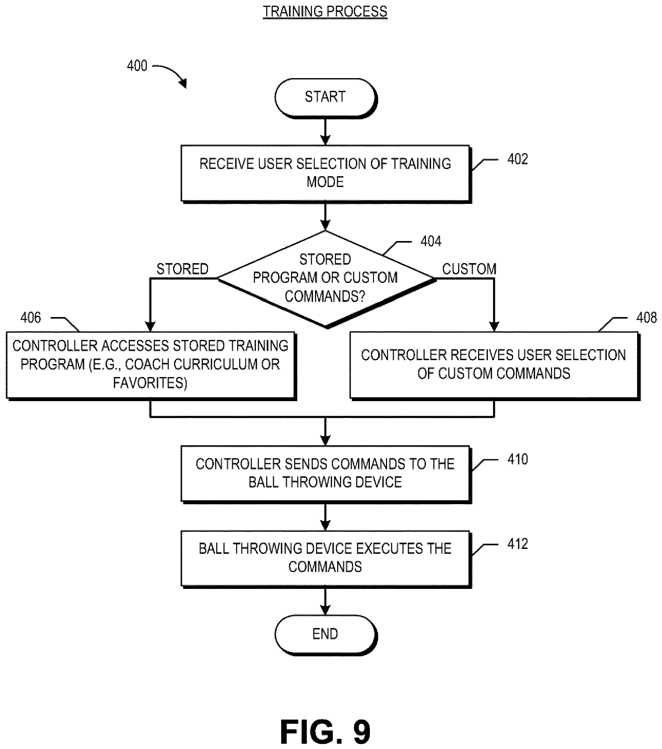

The process 300 begins at block 302, where the ball machine control module 222 of the controller 220 establishes communication with a ball throwing device. The ball machine control module 222 can establish communication in one embodiment according to a wireless or other network protocol. At block 304, the ball machine control module 222 causes the ball throwing machine to perform an initial training program. The performance of this initial training program is described in more detail below with respect to FIGURE 9. As an overview, however, the initial training program can include one or more drills, which may include user-defined ball throwing commands or stored ball-throwing commands (which may have been stored by the player or coach).

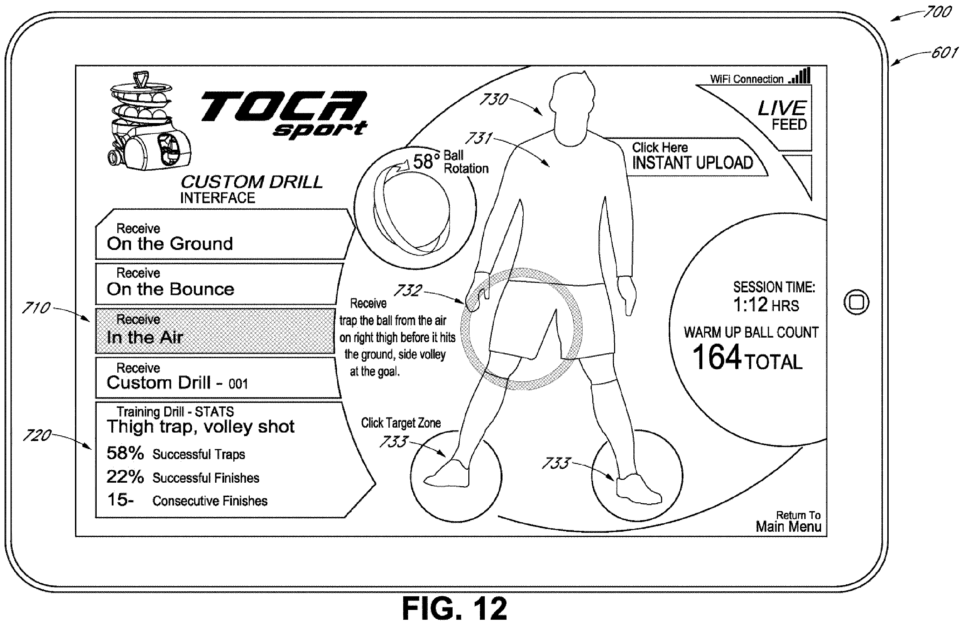

At block 306, the training module 224 of the controller 220 records playing training data. There are many ways that this training data may be recorded, and many possible forms that the training data may take. Player training data can be recorded by the training module 224 automatically in one embodiment. For example, the training module 224 can log the commands issued by the controller 220 to the ball throwing machine, or may log the commands actually executed by the machine. For instance, the machine can report to the controller 220 which commands executed successfully and which did not execute successfully. Successful execution of a command can mean, in one embodiment, that the ball throwing machine performed a throw. The amount of data that the training module 224 collects regarding issued or executed commands can vary as well. This data can include characteristics of a throw, such as the ball's velocity (or desired velocity), delivery (or desired delivery), trajectory (or desired trajectory), oscillation (or desired oscillation), and/or frequency (or desired frequency). Any subset of this information may be collected and stored by the training module 224 in computer storage. Alternatively, the training module 224 merely records that a throw command was issued or occurred. In yet another implementation, the training module 224 records the target area or target zone on the player's body that the throw is aimed at (see FIGURE 12).

As described above, the training module 224 may provide a user interface or voice recognition that enables a user to record whether a trap was successful. The player training data may include this success/lack of success information in addition to, or instead of, the more detailed throw or ball characteristics described above. In some embodiments, the training module 224 obtains an electronic indication of whether a player successfully trapped a ball or at least came in contact with the ball. This electronic indication can come from one or more sensors embedded in or placed on a players' clothing. Sensors can be placed or embedded anywhere on or in a player's clothing or on a player's person. Some example areas where sensors may be placed include the chest area, legs, thighs, feet, on the player's head, or any other location on the player's clothing or body. The sensors can be pressure sensors, contact sensors, or any other form of sensor that can produce an electronic output responsive to contact with a ball. For example, a player's shoe may have sensors embedded in one or more surfaces of the shoe to track whether the ball came into contact with such surfaces. Further, in some implementations sensors may be placed in a goal net (and/or on the posts) to determine whether the player has shot a ball in the goal. The sensors may communicate wirelessly with the controller 220 and/or ball throwing machine to provide sensor data to the training module 224. The training module 224 can incorporate the raw sensor data or processed versions thereof into the player training data. Accordingly, the player training data can include automatic indications of whether a trap was successful, or at least whether the ball came into contact with a player. One or more sensors can also be embedded in any of the balls described herein to track trapping, shooting, and other soccer skills.

The player training data may also include video data as described above. Further, the training module 224 can record any subset of the training data described herein. At block 308, the training module 224 submits the player training data to the soccer network application 260 with a request for feedback from a coach. This request for feedback may be explicit or implicit. For instance, a player can access a feature of the training module 224 that enables submission of player training data to the soccer network application 260. The soccer network application 260 may in turn make this player training data available to a coach of the player, or to a pool of coaches from which one is assigned or who picks the player training data for analysis. In another example scenario, the player can explicitly request the feedback of a particular coach when submitting the player training data to the soccer network application 260.

At block 310, the training module 224 receives a customized training program from the coach through the soccer network application 260. The customized training program can have any characteristics of any of the training programs herein. In one embodiment, the customized training program received includes a set of commands that the ball machine control module 222 can transmit to the ball control machine. In another embodiment, the coach can provide textual, verbal, or video instructions to the player regarding how to customize the player's training. The coach may also provide both an actual training program (including drills or machine commands) and textual, verbal, and/or video feedback. It should be understood, however, that the coach may not actually provide machine-level commands to the controller 220 (although this can be done in some embodiments). Rather, the soccer network application 260 can provide one or more user interfaces that enable a coach to select or define a training program having one or more drills. In response to that selection or definition, the soccer network application 260 can generate the appropriate commands that can be executed on the ball throwing machine.

At block 312, the ball machine control module 222 causes the ball throwing device to perform the customized training program. Thus, the ball machine control process 300 can enable a player to receive individualized attention from a remote coach on ball trapping skills or other soccer skills.

**FIGURE 9** illustrates an embodiment of a training process 400 that may be implemented using the ball throwing machine 10 and the controller 120 or 220. The training process 400 is a more detailed example implementation of the initial training program block 304 described above with respect to FIGURE 8. The training process 400 may be implemented, for example, by the ball machine control module 222 of the controller 220.

At block 402, the ball machine control module 222 receives a user selection of training mode. A variety of training modes may be provided. These training modes may include, for example, the ability to access a stored program (or a program over a network), and the ability to perform custom training. This custom training can be a "free-play" type of training, where a user can define each ball's throwing characteristics as they are thrown. Although not shown, a random play mode is also available in some implementations, enabling a user to select a random series of throws having random characteristics (such as random velocity, angle, trajectory, and so forth). The custom training can also involve the user creating his or her own training program, which the user may subsequently store in memory of the controller 220 or ball throwing machine. The controller 220 may also provide functionality (such as a user interface or user interface control) for users to uploads custom training programs created with the controller 220 to the soccer network application 260, where other players or coaches can download the custom training programs. Further, the soccer network application 260 can provide user interface options to comment on and/or rate custom training programs, thereby enabling users to better decide which custom training programs to download.

At decision block 402, the ball machine control module 222 determines whether the user selection is for a stored program or custom commands. If the selection was for a stored program, the ball machine control module 222 accesses the stored program at block 406. The stored program may be a program created by the user and saved as a "favorite" program or the like. Alternatively, the stored program can be a training program provided by a coach. If the user selection was for a custom program, the ball machine control module 222 receives a user selection of custom commands at block 408. The ball machine control module 222 of the controller 220 sends the commands to the ball throwing device at block 410, which executes the commands at block 412.

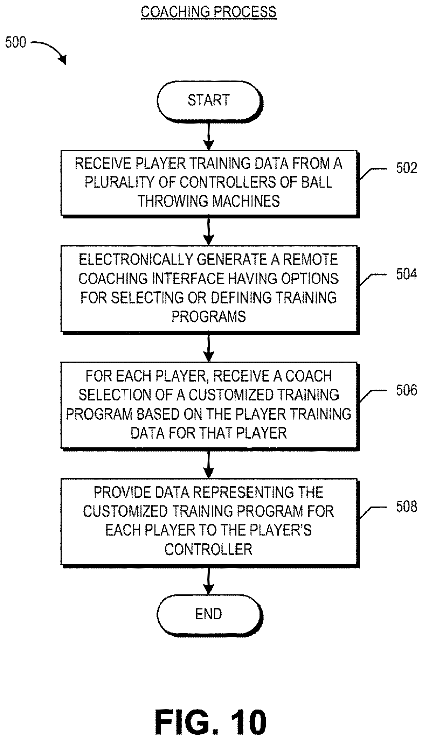

**FIGURE 10** illustrates an embodiment of a coaching process 500 that may be implemented at least in part by the soccer network application 260. In particular, the coaching process 500 can be implemented at least in part by the coaching module 262. The coaching process 500 can advantageously enable a coach to leverage his or her time to customize training for multiple players without having to be physically present with each of those players.

At block 502, the coaching module 262 receives player training data from a plurality of controllers of ball throwing machines, such as any of the controllers or machines described above. At block 504, the coaching module 262 electronically generates a remote coaching interface having options for selecting or defining training programs (see FIGURE 16, described below). For each player, at block 506 the coaching module receives a coach selection of a customized training program based on the player training data for that player. In one embodiment, the coach selects or creates the training program. In another embodiment, the soccer network application 260 recommends the training program based on an automated analysis of the player training data. For example, the network application 260 can recommend a training program that is automatically customized to a player based on any of the following: previous drills performed by the player, age of the player, skill level of the player, a player's position, a past or recommended heart rate target for the player, combinations of the same, or the like. At block 508, the coaching module 262 provides data representing the customized training program for each player to the player's controller.

### V. Example User Interfaces

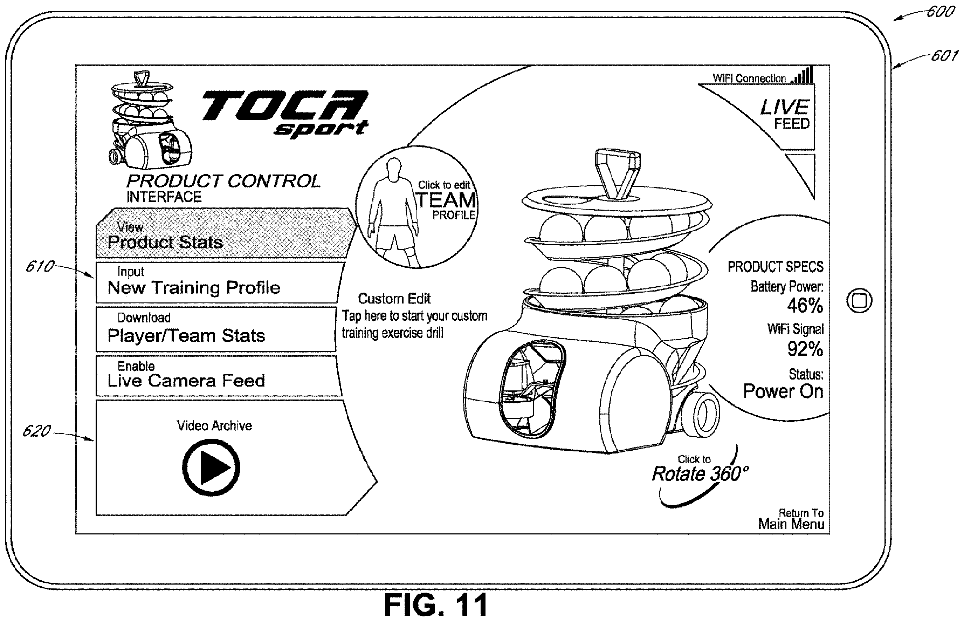

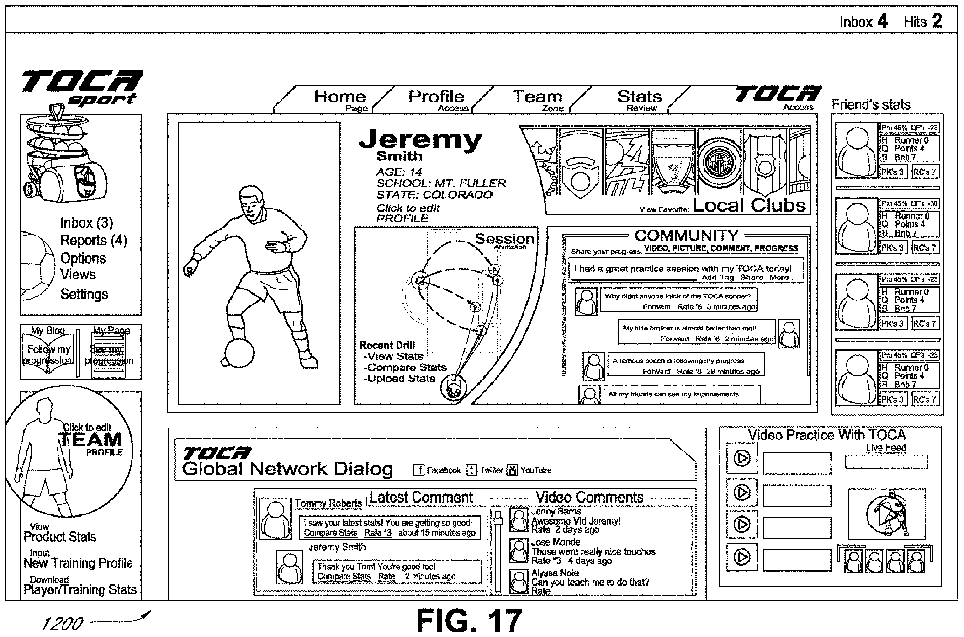

**FIGURES 11** through **17** illustrate embodiments of controller user interfaces 600-1200 that may be generated by the controller 120 or 220. Each of these user interfaces 600-1200 may be generated by an application on a handheld computing device, such as a tablet or smartphone. In addition, the user interfaces 600-1200 may also be generated on another computing device, such as a laptop or desktop, as part of a web page rendered by a browser or by other software. In the example embodiments shown, **FIGURES 11** through **15** illustrate example aspects of a controller application, while **FIGURES 16** and **17** illustrate example aspects of a soccer network application.

Referring specifically to **FIGURE 11****,** a controller user interface 600 is shown on a tablet device 601 for illustrative purposes, although other devices may be used to render the controller user interface 600. The controller user interface 600 includes controls 610 for accessing various options and may be generated by the ball machine control module 222. Example options shown include options to view product (ball machine) stats, create a new training profile to begin training, download player or team stats (from the soccer network application), and enabling a live camera feed. An addition control 620 is provided for viewing stored videos. These videos can be videos of the player, training videos on how to use the machine, or tutorials on how to improve soccer skills, to name a few.

**FIGURE 12** illustrates another controller user interface 700, shown on the example tablet device 601 for illustrative purposes. The user interface 700 may be generated by the ball machine control module 222. The controller user interface 700 includes controls 710 for controlling various ball-delivery options, which enable a user to select whether to receive a ball on the ground, on the bounce, or in the air, or some other custom setting. Statistics 720 regarding the player's training drills are also shown, which indicate that for thigh traps, the player has made 58% successful traps, 22% successful finishes (e.g., shots on goal after trapping the ball), and 15 consecutive finishes. A graphic 730 illustrates a part of the player's body on which the ball should be trapped for a particular drill. In the embodiment shown, the graphic 730 highlights the player's thigh as the target zone 732 to which the ball will be thrown and trapped. In one embodiment, the user may select a target zone 731, 732, or 733 on the graphic 730 (using a finger, mouse, or the other input mechanism) to cause balls to be thrown to a different area of the player's body. For example, selection of a foot target zone 733 can cause the ball throwing machine to throw balls toward the player's feet.

More particularly, in one embodiment, selection of a foot target zone can cause the machine to throw a ball along the ground, or lob the ball toward the player's feet. The distance or approximate distance of the player to the machine may be input by a user into the controller 220 to thereby enable the machine to make such a lob. Similarly, selection of a thigh or chest target zone can cause the controller 220 can cause the machine to lob, bounce, or line drive the ball to a player's thigh or chest. The controller 220 may also provide functionality for other target zones to be selected, such as the head or the hands (for goalies). For example, the controller 220 can enable a player to select a spot away from the player where the player is to dive and catch the ball with his or her hands.

In **FIGURE 13****,** another controller user interface 800 is shown, also illustrated on the table device 601. The controller user interface 800 includes controls for a user to edit a training session by accessing a drill forum, inputting a new drill profile, viewing technical demos, or accessing a drill training library from which to select new drills. The drill forum can allow players to share drills and training ideas and can be implemented in a web site or other network application. Another control 820 is provided for accessing a video archive of drills. The user may record a training session using any of the recording techniques described above by selecting a record control 930. The record control 930 is an example of a control that may be provided by the training module 224 to record player training data. A specific selected drill 940 is also shown, which includes a series of projected ball trajectories 941. A demo control 942 is provided to enable a user to view a demo animation (or video) of how the drill 940 is to be performed.

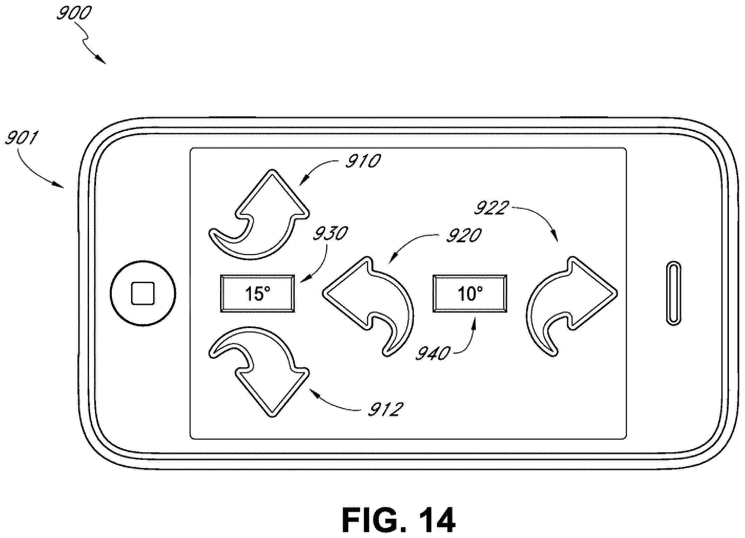

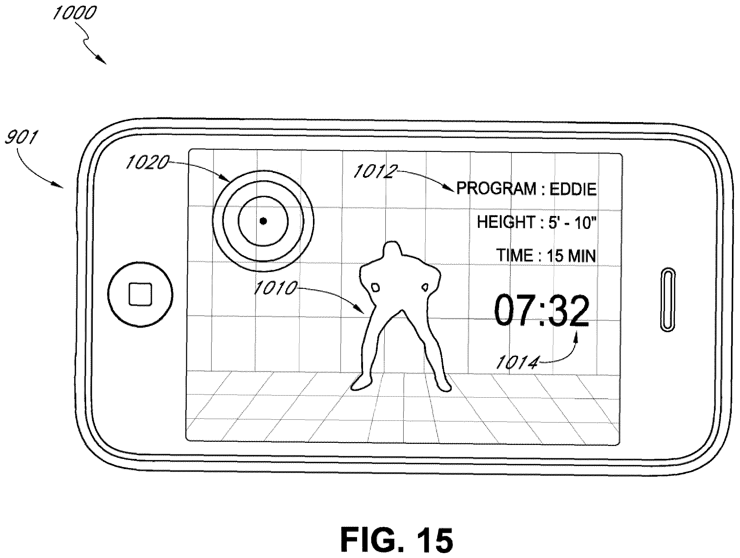

**FIGURES 14** and **15** illustrate additional example controller user interfaces 900, 1000 implemented in the context of a smartphone 901. It should be understood, however, that the user interfaces 900, 1000 may be implemented in other devices. Likewise, the other user interfaces described herein may be implemented on a smart phone. In **FIGURE 14****,** the user interface 900 includes arrow controls 910, 912, 920, 922 and angle controls 930, 940 to select a ball to be thrown in a specific direction. For example, selection of the up control 910 or down control 912 at an angle 930 of 15 degrees can cause the ball to be thrown up or down at an angle of 15 degrees from a horizontal plane (e.g., the ground). Similarly, selection of the left control 920 or right control 922 at an angle 940 of 10 degrees can cause the ball to be thrown left or right at an angle of 10 degrees from the vertical plane (e.g., perpendicular to the ground and intersecting the machine and the player). Multiple ones of the controls may be selected for any given throw. For instance, the up arrow 910 and the left arrow 920 may be selected simultaneously to cause a ball to be thrown to the upper left of the player at specified angles 930, 940.

In **FIGURE 15****,** the controller user interface 1000 includes a target zone 1020 that can be selected by a user, to which the ball machine will attempt to throw a ball. This target zone 1020 is shown relative to a graphic image of a player 1010. Thus, in the depicted embodiment, the target zone 1020 is to the right of the player's 1010 head, enabling the player to practice heading the ball. Statistics 1012 regarding the player, such as the player's name, height, and the time of the training program are shown as illustrative example statistics. Similarly, the time remaining 1014 in the program is also shown.

Referring to **FIGURE 16****,** an example coaching user interface 1100 is depicted as being in a web browser. A coach may access the coaching user interface via a web browser or other application software. The coaching user interface 1100 includes selectable controls 1110 that represent the coach's players, which include information such as their names, positions, their player training data, and so forth. Coach-selection of one of the player controls 1110 can cause a curriculum selection display 1120 to be produced on the user interface 1100 as well as player training data 1140 for a particular player. In an alternative embodiment, the user interface 1100 can enable the coach to create training programs without first selecting a player. The coach can save such training programs for subsequent selection by a player. Further, in some embodiments, the user interface 1100 may be used by a player to create a custom training program or modify another user's custom training program online. The player can then use the user interface 1100 to send the custom training program to a controller (220).

The example player training data 1140 shown includes data regarding the most recent session the player had with the ball throwing machine. This data includes trap completion data 1144 and video 1146. A button link 1148 to previous sessions is also provided. The curriculum selection display 1120 includes various controls 1122, 1124 that enable a coach to define a training program. These controls include a selection control 1122 for selecting a stored (e.g., previously-created) program and creation controls 1124 for creating a custom program. Some example parameters for creating a custom program are depicted with respect to the controls 1124, enabling a coach to define for each ball in a program its various characteristics (such as ball delivery type, velocity, oscillation, etc.). These characteristics are merely examples. In other embodiments, for instance, the coaching user interface 1100 may provide functionality for a coach to input the types of target zones each ball is directed to, such as the thigh, chest, foot, etc., in addition to or instead of the characteristics shown.

**FIGURE 17** illustrates an example social networking user interface 1200 that may be generated by the soccer network application 260. The social networking user interface 1200 includes profile information for a player, community features for discussing training progress, videos, and other related social networking features. For example, some potential features of the social networking user interface 1200 or other such user interfaces can include, among others, depicting of results of training or games, providing of tips and training advice, blogs, videos, player ratings, player rankings (including possibly highlight rankings for ranking impressive video-recorded training sessions), help request functionality for asking an expert or coach for help, comments from a professional, online webinars and training, contests, event organizations, recruiting tips, other recruiting features, general fitness training, and the like.

### VI. Example Hopper for Ball Throwing Machine

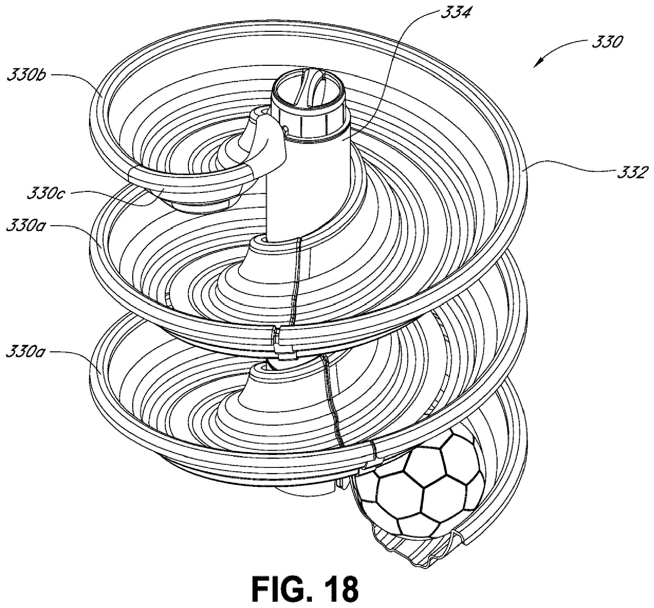

Turning now to **FIGURE 18****,** a hopper 330 for a ball throwing machine is shown. The hopper 330 can be used to receive and/or store balls to later be ejected or thrown by a ball throwing machine. It will be understood that the illustrated hopper 330 can be used in place of the hopper 30 of the ball throwing machine 10 discussed previously. The hopper 330 and/or aspects thereof can be used with various embodiments of ball throwing machine.

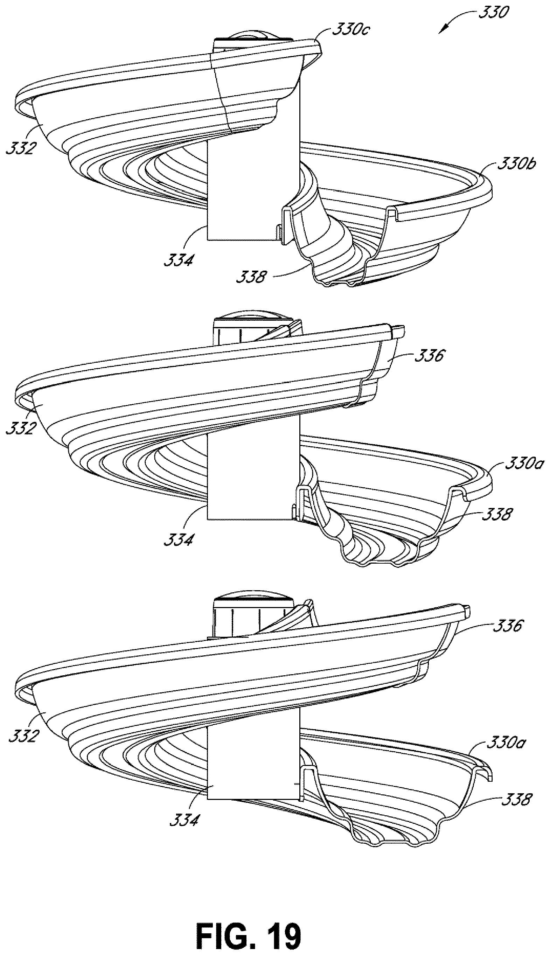

As shown, the hopper 330 is a gravity-type hopper with a spiraling ramp 332 located around an internal tube 334. The illustrated hopper 330 has a modular construction to allow for the size of the hopper to be increased or decreased as desired or needed. Thus, a hopper 330 can be made up of one or more hopper sections 330a, 330b. **Figure 19** shows the three sections of the hopper 330 of Figure 18 in an exploded view. As will be described in more detail below, each section 330a, 330b can nest in or be received onto the section below itself, or onto the lower section 16 of the ball throwing machine 10 (see Figures 1 & 2).

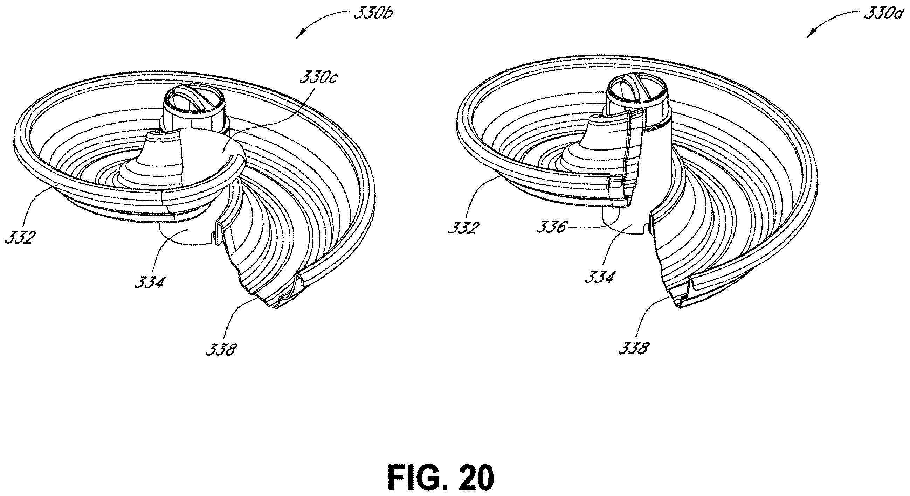

In some embodiments, each hopper section is identical, while in other embodiments there are two or more types of hopper sections. For example, **Figures 19** **&** **20** show two different types of hopper sections, a standard section 330a and an end section 330b. In some embodiments a third section can form a second end section. The second end section can connect to or be a part of the lower section of the ball hopper and may be a part of or connect to the ball receiving area 22 (see Figure 2).

In some embodiments, an end cap 330c can be integrally formed with the end section 330b. The end cap can mark the beginning of the spiraling ramp 332. Balls can be placed on the ramp at the end section 330b, such as near the end cap, to load or reload the hopper. In addition, in some embodiments the end cap 330c of the end section 330b can be removable and can attach to a standard section 330a to form an end section 330b.

The standard section 330a is shown with a projecting flange 336 at the top of the spiral that can receive a bottom edge 338 of a hopper section positioned above it. For example, an end section 330b can be placed on a standard section 330a with the bottom edge 338 of the end section 330b resting on the flange 336. This can help ensure proper alignment of the sections while also ensuring smooth rolling of balls between hopper sections.

Each spiral ramp 332 can be connected to a support section 334. For example the spiral ramp 332 and support section can be connected with adhesive, fasteners, friction fit, key and channel, etc. In still other embodiments the support section 334 can be integrally formed with the spiral ramp. The support section 334 can be used to impart structural strength to the hopper and can also provide appropriate spacing such that balls within the hopper are able to properly rotate and move downward in the hopper. As illustrated, the support section 334 is in the form of a tube. Tubes can provide structural support and can allow for simple stackability between hopper sections.

The hopper sections, each with spiral ramp 332 and tube 334, can connect in one of many different ways to form an assembled hopper 330. For example, two or more tubes 334 can connect via a friction fit, loose fit, fasteners, key and channel, etc. In addition, the tubes may include a locking mechanism to prevent rotation and/or movement in one or more directions.

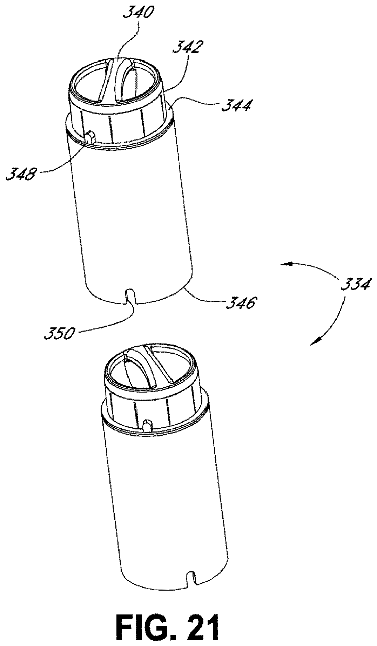

**Figure 21** illustrates two tubes 334 and shows how they can be stacked on top of one another. As shown, the top portion 342 of the tube 334 can have a smaller diameter than the bottom portion 346. This can allow the bottom portion of one tube 334 to advance over the top portion 342 of another tube in a stacked manner. With a shoulder 344 created by this stepped outer diameter, the bottom portion 346 of a first tube can rest on the shoulder 344 formed at the junction of the two different outer diameters of a second tube.

When connected, the two tubes may also align the spiral ramps 332 to form an essentially continuous ramp as has been described. In some embodiments an alignment system can include a notch 350 and a corresponding protrusion 348 that can be used to align the hopper sections. The protrusion 348 on one hopper section can fit within the notch 350 on a second hopper section. As shown, each tube 334 includes a protrusion 348 near the top and a notch 350 near the bottom of the tube. In this way, each tube may be positioned below or above another tube and provide proper alignment for the ramps and for the hopper sections generally. It will be understood that one or more of a number of different alignment systems can be used.

As shown the tube 334 is substantially cylindrical, though the tubes can also have other shapes such as conical, pyramidal, and elliptical. In some embodiments the shape of the tube itself can be part of an alignment system and/or locking mechanism. For example, an elliptical tube can be limited to two connecting positions, where one position may not work because of the position of the ramp. In addition, an elliptical tube can prevent rotation of the tube in the x and y directions where z defines the vertical axis. Some embodiments can include a latch to secure the tubes together and to prevent separation absent a corresponding active step to unlatch the tubes. The latch can be part of both the alignment system and the locking mechanism.

It can be seen that each tube 334 can include a handle 340 that can allow for simple control of the hopper section, as well as to control placement on and/or removal from a ball throwing machine.

Having a modular hopper 330 with stackable hopper sections can allow the size of the hopper to be increased or decreased to adjust capacity as needed. This adjustable capacity can benefit users in many ways. For example, a purchaser can have the option to determine the size hopper to be used and may not be forced into a one size fits all scenario. Additional hopper sections can be purchased at a later time if desired. In addition, a team or coach may desire to use a large number of balls at a training facility or home field, but only a limited number when off site or on the road. The ball throwing machine with the desired number of hopper sections can be used in both cases. This can allow coaches and teams to have greater flexibility in training, warming up, testing, etc.

The spiraling ramp 332 and the ball throwing machine can be designed for use with more than one ball size or type. For example, a coach may be involved with a youth team and with an adult team and the coach may therefore desire to use different sized balls for the different teams. As another example, a player using a single ball throwing machine may use small balls when training and larger balls when warming up for a game. As has been mentioned, using a smaller than regulation soccer ball provides many benefits including enabling more effective training of ball handling skills. At the same time, there are times when it will be desirable to use a regulation sized soccer ball.

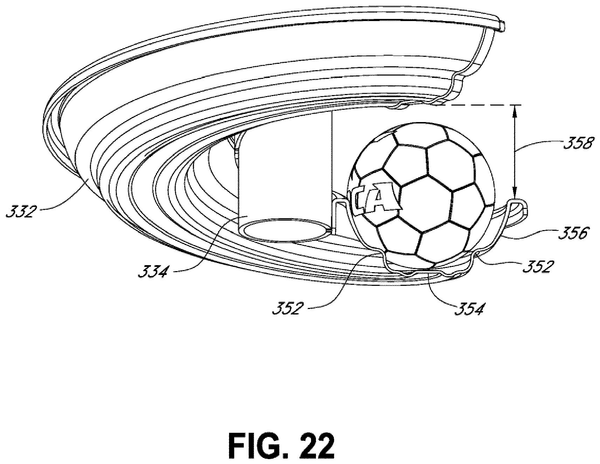

**FIGURE 22** shows an example spiraling ramp 332 that can be used with different sized balls while minimizing rolling resistance for the different balls. The spiral ramp 332 can include a rail system that is sized and dimensioned to minimize or reduce the surface area of contact between the ramp and balls of different sizes while guiding the balls along a desired path. Specifically, the contact area taken along a cross-sectional slice of the ball and ramp is desirably less than 1/5, 1/6, 1/7, 1/8, 1/10, or 1/20 the circumference the ball of a given size, such as a size 1, 2, 3, 4, or 5 ball. Desirably, the contact area is established only between the rails and the ball. Minimizing contact can reduce friction which in turn can provide a better rolling surface for the balls. This can minimize the pitch required for the ramp which then in turn can allow for increased ball capacity of the hopper. Forcing the balls along a desired path can also be beneficial in reducing the propensity of the balls getting stuck together and causing jams in the system. Such a smooth rolling surface can also reduce the cost of the system. This is because though an agitator or moving carousel may be used, it is not required.

The spiraling ramp 332 of FIGURE 22 shows rails or ridges 352 formed in the ramp surface on opposite sides of the ramp. A ball can ride on the two ridges 352 while on the ramp. Desirably, each of the ridges is continuous and the two ridges define a constant width and a constant pitch. In addition to providing a smooth rolling surface, the ridges can also align and center the balls within the device. This can help ensure proper alignment in the lower portion of the ball throwing machine, such as when the ball is positioned at the throwing wheels. In addition, this can help prevent jams in the system caused from misaligned balls forcing other balls out of alignment which can create bridging or sticking together of balls across an area of the ramp.

The two ridges 352 can be used with a variety of different sized balls. For example, the ball shown can represent a size 3 ball that only rides on the two rails. A smaller ball, such as a size 1 ball, can use the two rails 352 and a bottom surface, ridge, or rail 354. In other embodiments, the ball shown can represent a size 5 ball and a size 3 ball may use the same two rails 352, or the two rails plus the bottom rail 354. An even smaller ball, such as a size 1 ball, can also use all three rails in some embodiments. In an embodiment with five rails, a size 5 ball can use the two top most rails, while the size 3 ball can use the next two rails down and the size one ball can use these two rails together with a bottom rail.

To provide a smooth rolling surface, it may be desirable to have the ridges engage the ball somewhere in the bottom 1/3 or ¼ of the ball. A two/three rail system is shown, though total of two rails, four rails, five rails, or even six rails could be used. Each pair, or is some instances group or three rails could be used to service a single size of ball or multiple relatively similar sizes of balls.

Another feature of certain embodiments, including that shown is a high sidewall 356 that can advantageously prevent balls from coming out along the sides of the hopper. In such an embodiment, balls can be added and/or removed from the top or bottom of the hopper but cannot be removed and cannot fall out at other locations. This can also help provide a smooth rolling surface because the sidewalls can be used to guide the movement of the balls to prevent them from traveling in undesired directions or in ways that might create clogs in the system. The sidewall 356 can be sized such that the smallest ball designed to be used in the system cannot pass through the gap 358 formed between the sidewall 356 and the corresponding bottom of the ramp 332 directly above it.

### VII. Terminology

Many other variations than those described herein will be apparent from this disclosure. For example, depending on the embodiment, certain acts, events, or functions of any of the algorithms described herein can be performed in a different sequence, can be added, merged, or left out all together (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together. Although certain computer-implemented tasks are described as being performed by a particular entity, other embodiments are possible in which these tasks are performed by a different entity.

The various illustrative logical blocks, modules, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

The various illustrative logical blocks and modules described in connection with the embodiments disclosed herein can be implemented or performed by a machine, such as a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor can be a microprocessor, but in the alternative, the processor can be a controller, microcontroller, or state machine, combinations of the same, or the like. A processor can also be implemented as a combination of computing devices, e.g., a combination of a DSP and a microprocessor, a plurality of microprocessors, one or more microprocessors in conjunction with a DSP core, or any other such configuration. A computing environment can include any type of computer system, including, but not limited to, a computer system based on a microprocessor, a mainframe computer, a digital signal processor, a portable computing device, a personal organizer, a device controller, and a computational engine within an appliance, to name a few.

The steps of a method, process, or algorithm described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of non-transitory computer-readable storage medium, media, or physical computer storage known in the art. An exemplary storage medium can be coupled to the processor such that the processor can read information from, and write information to, the storage medium. In the alternative, the storage medium can be integral to the processor. The processor and the storage medium can reside in an ASIC. The ASIC can reside in a user terminal. In the alternative, the processor and the storage medium can reside as discrete components in a user terminal.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding, with or without author input or prompting, whether these features, elements and/or states are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

## Claims

1. A ball throwing system comprising:
a ball throwing device (10) including:
a hopper (30) configured to hold a plurality of balls;
a ball delivery device (40) configured to receive the plurality of balls from the hopper, the ball delivery device comprising:
at least one wheel (42) configured to impart motion to a first ball, and
a frame attached to the at least one wheel, wherein the frame is positionable to control a trajectory of the ball;
a ball delivery control circuit configured to control a position of the frame and a speed of the one or more wheels; and
a handheld computing device in communication with the ball delivery control circuit, the handheld computing device comprising one or more processors configured to at least:
wirelessly transmit first instructions to the ball throwing device, the first instructions corresponding to a first drill that comprises a set of one or more ball trapping drills, execution of the first instructions causing the ball throwing device to deliver one or more of the plurality of balls to a player according to the first drill during said one or more ball trapping drills, enabling the player to practice trapping the ball and thereby improve ball control skills;
record player training data, the player training data comprising information regarding training of the player performed during the first drill; and
submit the player training data over a network to a server for storage in a profile associated with the player along with a request for feedback from a remote coach through the soccer network application;
in response to said submission of the training session data, wirelessly receive a customized training program from a coach via the server, the customized training program comprising second instructions corresponding to one or more second drills to be executed by the ball throwing device; and one or more logic modules stored on a non-transitory storage medium of the handheld computing device, the one or more logic modules including instructions being executable by one or more processors of the handheld computing device to perform operations including wirelessly transmitting the first instructions and the second instructions to the ball throwing device.

2. The system of claim 1, wherein the handheld computing device is a tablet.

3. The system of claim 1, wherein the ball delivery device (40) is configured to deliver balls that are smaller than adult regulation size soccer balls to thereby enable more effective training of ball trapping skills.

4. The system of claim 1, wherein the player training data comprises data regarding a number of balls delivered and trajectories of the balls delivered.

5. The system of claim 1, wherein the player training data comprises video data.

6. The system of claim 1, wherein the first drill comprises a series of throwing manoeuvres, the first drill requiring at least one of: (1) the at least one wheel to have a first speed, or (2) the frame to deliver a first ball at a first trajectory.

7. The system according to any one of the preceding claims, wherein the ball is a soccer ball.

8. A method of controlling a ball throwing device (40), the method comprising
establishing communication between a ball throwing device and a handheld computing device;
wirelessly transmitting, to a ball throwing device, first instructions, the first instructions corresponding to a first drill and causing the ball throwing device to deliver a first ball to a player according to the first drill, wherein the ball throwing device includes:
a hopper (30) configured to hold a plurality of balls;
a ball delivery device (40) configured to receive the plurality of balls from the hopper, the ball delivery device comprising:
at least one wheel (42) configured to impart motion to a first ball, and
a frame attached to the at least one wheel, wherein the frame is positionable to control a trajectory of the ball;
record player training data, the player training data comprising information regarding training of the player performed during the first drill; and
submitting the player training data over a network to a server for storage in a profile associated with the player along with a request for feedback from a remote coach through the soccer network application;
in response to said submission of the training session data, wirelessly receiving a customized training program from a coach via the server and causing the ball throwing device to execute the second instructions corresponding to the customized training program.

9. The method of claim 8, wherein the one or more physical processors are included in a tablet.

10. The method of claim 8, wherein the ball delivery device (40) is configured to deliver balls that are smaller than adult regulation size soccer balls to thereby enable more effective training of ball trapping skills.

11. The method of claim 8, wherein the player training data comprises data regarding a number of balls delivered and trajectories of the balls delivered.

12. The method of claim 8, wherein the player training data comprises video data.

13. The method of claim 8, wherein the first drill comprises a series of throwing maneuvers, the first drill requiring at least one of: (1) the at least one wheel to have a first speed, or (2) the frame to deliver a first ball at a first trajectory.

## Patentansprüche

1. Ballwurfsystem, umfassend:
eine Ballwurfvorrichtung (10), enthaltend:
einen Trichter (30), der konfiguriert ist, um eine Vielzahl von Bällen zu halten;
eine Ballabgabevorrichtung (40), die konfiguriert ist, um die Vielzahl von Bällen aus dem Trichter aufzunehmen, die Ballabgabevorrichtung umfassend:
mindestens ein Rad (42), das konfiguriert ist, um einen ersten Ball in Bewegung zu versetzen, und
einen Rahmen, der an dem mindestens einen Rad befestigt ist, wobei der Rahmen zum Steuern einer Flugbahn des Balls positionierbar ist;
eine Ballabgabesteuerschaltung, die konfiguriert ist, um eine Position des Rahmens und eine Geschwindigkeit des einen oder der mehreren Räder zu steuern; und
eine tragbare Rechenvorrichtung in Kommunikation mit der Ballabgabesteuerschaltung, wobei die tragbare Rechenvorrichtung einen oder mehrere Prozessoren umfasst, konfiguriert, um mindestens:
erste Anweisungen drahtlos an die Ballwurfvorrichtung zu senden, wobei die ersten Anweisungen einer ersten Übung entsprechen, die einen Satz aus einer oder mehreren Ballannahmeübungen umfasst, wobei eine Ausführung der ersten Anweisungen bewirkt, dass die Ballwurfvorrichtung einen oder mehrere der Vielzahl von Bällen an einen Spieler gemäß der ersten Übung während der einen oder den mehreren Übungen abgibt, wodurch der Spieler die Ballannahme trainieren und dadurch Ballkontrollfähigkeiten verbessern kann;
Spielertrainingsdaten aufzuzeichnen, wobei die Spielertrainingsdaten Informationen bezüglich eines Trainings des Spielers umfassen, das während der ersten Übung durchgeführt wird; und
die Spielertrainingsdaten über ein Netzwerk einem Server zur Speicherung in einem Profil vorzulegen, das mit dem Spieler verknüpft ist, gemeinsam mit einer Anfrage nach einem Feedback von einem Ferntrainer durch die Fußballnetzwerkanwendung;
in Antwort auf das Vorlegen der Trainingssitzungsdaten, ein individuell angepasstes Trainingsprogramm von einem Trainer drahtlos über den Server zu empfangen, wobei das individuell angepasste Trainingsprogramm zweite Anweisungen umfasst, die einer oder mehrerer zweiten Übungen entsprechen, die durch die Ballwurfvorrichtung auszuführen sind; und ein oder mehrere Logikmodule, die auf einem nicht transitorischen Speichermedium der tragbaren Rechenvorrichtung gespeichert sind, wobei das eine oder die mehreren Logikmodule Anweisungen enthalten, die durch einen oder mehrere Prozessoren der tragbaren Rechenvorrichtung ausführbar sind, um Operationen durchzuführen, die ein drahtloses Senden der ersten Anweisungen und der zweiten Anweisungen an die Ballwurfvorrichtung enthalten.

2. System nach Anspruch 1, wobei die tragbare Rechenvorrichtung ein Tablet ist.

3. System nach Anspruch 1, wobei die Ballabgabevorrichtung (40) konfiguriert ist, um Bälle abzugeben, die kleiner als Fußbälle der regelgerechten Größe für Erwachsene sind, um dadurch ein effektiveres Training von Ballannahmefähigkeiten zu ermöglichen.

4. System nach Anspruch 1, wobei die Spielertrainingsdaten Daten bezüglich einer Anzahl von abgegebenen Bällen und Flugbahnen der abgegebenen Bälle umfassen.

5. System nach Anspruch 1, wobei die Spielertrainingsdaten Videodaten umfassen.

6. System nach Anspruch 1, wobei die erste Übung eine Reihe von Wurfmanövern umfasst, wobei die erste Übung mindestens eines erfordert von: (1) das mindestens eine Rad weist eine erste Geschwindigkeit auf oder (2) der Rahmen gibt einen ersten Ball bei einer ersten Flugbahn ab.

7. System nach einem der vorstehenden Ansprüche, wobei der Ball ein Fußball ist.

8. Verfahren zum Steuern einer Ballwurfvorrichtung (40), wobei das Verfahren ein
Errichten einer Kommunikation zwischen einer Ballwurfvorrichtung und einer tragbaren Rechenvorrichtung umfasst;
ein drahtloses Senden erster Anweisungen an eine Ballwurfvorrichtung, wobei die ersten Anweisungen einer ersten Übung entsprechen und die Ballwurfvorrichtung veranlassen, einen ersten Ball an einen Spieler gemäß der ersten Übung abzugeben, wobei die Ballwurfvorrichtung enthält:
einen Trichter (30), der konfiguriert ist, um eine Vielzahl von Bällen zu halten;
eine Ballabgabevorrichtung (40), die konfiguriert ist, um die Vielzahl von Bällen aus dem Trichter aufzunehmen, die Ballabgabevorrichtung umfassend:
mindestens ein Rad (42), das konfiguriert ist, um einen ersten Ball in Bewegung zu versetzen, und
einen Rahmen, der an dem mindestens einen Rad befestigt ist, wobei der Rahmen zum Steuern einer Flugbahn des Balls positionierbar ist;
Aufzeichnen von Spielertrainingsdaten, wobei die Spielertrainingsdaten Informationen bezüglich eines Trainings des Spielers umfassen, das während der ersten Übung durchgeführt wird; und
Vorlegen der Spielertrainingsdaten über ein Netzwerk einem Server zur Speicherung in einem Profil, das mit dem Spieler verknüpft ist, gemeinsam mit einer Anfrage nach einem Feedback von einem Ferntrainer durch die Fußballnetzwerkanwendung;
in Antwort auf das Vorlegen der Trainingssitzungsdaten, drahtloses Empfangen eines individuell angepassten Trainingsprogramms von einem Trainer über den Server und Veranlassen, dass die Ballwurfvorrichtung die zweiten Anweisungen entsprechend dem individuell angepassten Trainingsprogramm ausführt.

9. Verfahren nach Anspruch 8, wobei der eine oder die mehreren physischen Prozessoren in einem Tablet enthalten sind.

10. Verfahren nach Anspruch 8, wobei die Ballabgabevorrichtung (40) konfiguriert ist, um Bälle abzugeben, die kleiner als Fußbälle der regelgerechten Größe für Erwachsene sind, um dadurch ein effektiveres Training von Ballannahmefähigkeiten zu ermöglichen.

11. Verfahren nach Anspruch 8, wobei die Spielertrainingsdaten Daten bezüglich einer Anzahl von abgegebenen Bällen und Flugbahnen der abgegebenen Bälle umfassen.

12. Verfahren nach Anspruch 8, wobei die Spielertrainingsdaten Videodaten umfassen.

13. Verfahren nach Anspruch 8, wobei die erste Übung eine Reihe von Wurfmanövern umfasst, wobei die erste Übung mindestens eines erfordert von: (1) das mindestens eine Rad weist eine erste Geschwindigkeit auf oder (2) der Rahmen gibt einen ersten Ball bei einer ersten Flugbahn ab.

## Revendications

1. Système de lancement de balles comprenant :
un dispositif de lancement de balles (10) comprenant :
une trémie (30) configurée pour contenir une pluralité de balles ;
un dispositif de fourniture de balles (40) configuré pour recevoir la pluralité de balles de la trémie, le dispositif de fourniture de balles comprenant :
au moins une roue (42) configurée pour communiquer un mouvement à une première balle et
un châssis fixé à la au moins une roue, dans lequel le châssis peut être positionné pour commander une trajectoire de la balle ;
un circuit de commande de fourniture de balles configuré pour commander une position du châssis et une vitesse des une ou plusieurs roues ; et
un dispositif informatique portable en communication avec le circuit de commande de fourniture de balles, le dispositif informatique portable comprenant un ou plusieurs processeurs configurés pour au moins :
transmettre sans fil des premières instructions au dispositif de lancement de balles, les premières instructions correspondant à un premier exercice qui comprend un ensemble d'un ou plusieurs exercices de piégeage de balles, l'exécution des premières instructions amenant le dispositif de lancement de balles à délivrer une ou plusieurs de la pluralité de balles à un joueur selon le premier exercice au cours desdits un ou plusieurs exercices de piégeage de balles, en permettant au joueur d'effectuer le piégeage de la balle et d'améliorer ainsi les compétences de commande de la balle ;
enregistrer des données de formation du joueur, les données de formation du joueur comprenant des informations concernant la formation du joueur effectuée au cours du premier exercice ; et
soumettre les données de formation du joueur via un réseau à un serveur pour le stockage dans un profil associé au joueur conjointement avec une demande de retour d'un coach distant par application d'un réseau de football américain (soccer) ;
en réponse à ladite soumission des données de séance de formation, recevoir sans fil un programme de formation spécialisé d'un coach via le serveur, le programme de formation spécialisé comprenant des secondes instructions correspondant à un ou plusieurs seconds exercices à exécuter par le dispositif de lancement de balles et un ou plusieurs modules logiques stockés sur un support de stockage non transitoire du dispositif informatique portable, les un ou plusieurs modules logiques comprenant des instructions exécutables par un ou plusieurs processeurs du dispositif informatique portable pour effectuer des opérations comprenant la transmission sans fil des premières instructions et des secondes instructions au dispositif de lancement de balles.

2. Système selon la revendication 1, dans lequel le dispositif informatique portable est une tablette.

3. Système selon la revendication 1, dans lequel le dispositif de fourniture de balles (40) est configuré pour délivrer des balles qui sont plus petites que les balles de soccer de taille de régulation d'adulte pour ainsi permettre une formation plus efficace des compétences de piégeage de balles.

4. Système selon la revendication 1, dans lequel les données de formation de joueurs comprennent des données concernant un certain nombre de balles délivrées et de trajectoires des balles délivrées.

5. Système selon la revendication 1, dans lequel les données de formation de joueurs comprennent des données vidéo.

6. Système selon la revendication 1, dans lequel le premier exercice comprend une série de manoeuvres de lancement, le premier exercice nécessitant au moins l'une des situations suivantes : (1) la au moins une roue a une première vitesse ou (2) le châssis délivre une première balle selon une première trajectoire.

7. Système selon l'une quelconque des revendications précédentes, dans lequel la balle est une balle de soccer.

8. Procédé de commande d'un dispositif de lancement de balles (40), le procédé comprenant :
l'établissement d'une communication entre un dispositif de lancement de balles et un dispositif informatique portable ;
la transmission sans fil à un dispositif de lancement de balles de premières instructions, les premières instructions correspondant à un premier exercice et amenant le dispositif de lancement de balles à délivrer une première balle à un joueur selon le premier exercice, dans lequel le dispositif de lancement de balles comprend :
une trémie (30) configurée pour contenir une pluralité de balles ;
un dispositif de fourniture de balles (40) configuré pour recevoir la pluralité de balles de la trémie, le dispositif de fourniture de balles comprenant :
au moins une roue (42) configurée pour communiquer un mouvement à une première balle et
un châssis fixé à la au moins une roue, dans lequel le châssis peut être positionné pour commander une trajectoire de la balle ;
enregistrer des données de formation de joueur, les données de formation de joueur comprenant des informations concernant la formation de joueur effectuée au cours du premier exercice ; et
soumettre les données de formation de joueur via un réseau à un serveur pour le stockage dans un profil associé au joueur conjointement avec une demande de retour d'un coach distant par application d'un réseau de soccer ;
en réponse à ladite soumission des données de séance de formation, recevoir sans fil un programme de formation spécialisé d'un coach via le serveur et amener le dispositif de lancement de balles à exécuter les secondes instructions correspondant au programme de formation spécialisé.

9. Procédé selon la revendication 8, dans lequel les un ou plusieurs processeurs sont inclus dans une tablette.

10. Procédé selon la revendication 8, dans lequel le dispositif de fourniture de balles (40) est configuré pour délivrer des balles qui sont plus petites que les balles de soccer de taille de régulation d'adulte pour ainsi permettre une formation plus efficace des qualités de piégeage de balles.

11. Procédé selon la revendication 8, dans lequel les données de formation de joueurs comprennent des données concernant un nombre de balles délivrées et de trajectoires des balles délivrées.

12. Procédé selon la revendication 8, dans lequel les données de formation de joueurs comprennent des données vidéo.

13. Procédé selon la revendication 8, dans lequel le premier exercice comprend une série de manoeuvres de lancement, le premier exercice nécessitant au moins l'une des situations suivantes : (1) la au moins une roue a une première vitesse ou (2) le châssis délivre une première balle selon une première trajectoire.
